**Europäisches Patentamt**

**European Patent Office**

**Office européen des brevets**

(11) Veröffentlichungsnummer: **0 178 380 B1**

(12) **EUROPÄISCHE PATENTSCHRIFT**

(45) Veröffentlichungstag der Patentschrift: **08.05.91**

(51) Int. Cl.⁵: **H02K 29/06, H02K 3/04**

(21) Anmeldenummer: **85106608.4**

(22) Anmeldetag: **29.05.85**

(54) **Elektronisch kommutierte Gleichstrommaschine und deren Verwendung.**

(30) Priorität: **13.09.84 DE 3433695**
**03.05.85 DE 3515987**

(43) Veröffentlichungstag der Anmeldung:
**23.04.86 Patentblatt 86/17**

(45) Bekanntmachung des Hinweises auf die
Patenterteilung:
**08.05.91 Patentblatt 91/19**

(84) Benannte Vertragsstaaten:
**AT BE CH DE FR GB IT LI LU NL SE**

(56) Entgegenhaltungen:
| | |
|---|---|
| WO-A-85/01158 | CH-A- 479 929 |
| DE-A- 1 538 913 | DE-A- 2 632 013 |
| DE-A- 2 949 979 | DE-A- 3 231 966 |
| FR-A- 894 422 | FR-A- 1 145 201 |
| FR-A- 2 272 515 | GB-A- 0 005 562 |
| GB-A- 2 142 786 | US-A- 3 377 534 |
| US-A- 4 187 453 | |

**PATENTS ABSTRACTS OF JAPAN, Band 7,
Nr. 186 (E-193) [1331], 16. August 1983; & JP -
A - 58 89 054 (NIHON SAABO K.K.) 27-05-1983**

**PATENTS ABSTRACTS OF JAPAN, Band 3,
Nr. 149 (E-157), 8. Dezember 1979, Seite 148
E 157; & JP - A - 54 129 403 (FUJITSU K.K.)**

**10-06-1979**

**PATENTS ABSTRACTS OF JAPAN, Band 4,
Nr. 130 (E-25) [612], 12. September 1980, Seite 139 E 25; & JP - A - 55 83 449
(MATSUSHITA DENKI SANGYO K.K.)
23-06-1980**

(73) Patentinhaber: **Rabe, Erich
Auf der Schanz 44
W-8500 Nürnberg 60(DE)**

(72) Erfinder: **Rabe, Erich
Auf der Schanz 44
W-8500 Nürnberg 60(DE)**

(74) Vertreter: **Brehm, Hans-Peter, Dr. Dipl.-Chem.
et al
Patentanwälte Kern, Brehm & Partner Albert-
Rosshaupter-Strasse 73
W-8000 München 70(DE)**

## Beschreibung

Die Erfindung betrifft eine elektronisch kommutierte Gleichstrommaschine. Weiterhin betrifft die Erfindung bevorzugte Anwendungen dieser Maschine.

Die Gleichstrommaschine kann sowohl als Gleichstrommotor wie als Generator eingesetzt werden. Nachstehend wird diese Maschine insbesondere für die motorische Anwendung in Form eines vielpoligen, elektronisch kommutierten Gleichstrommotors beschrieben, ohne daß damit eine Einschränkung der Erfindung beabsichtigt ist.

Mehr im einzelnen betrifft die Erfindung eine elektronisch kommutierte Gleichstrommaschine, mit einem Rotor mit wenigstens einem Permanentmagneten mit wenigstens vier konzentrisch zur Rotordrehachse angeordneten und im wesentlichen senkrecht zu dieser polarisierten Polen benachbart zu einem ringförmigen, nutenfreien Rückschlußteil, ferner mit wenigstens einer, im Ringspalt zwischen Rotor und Rückschlußteil angeordneten mäanderförmigen Leiterbahnanordnung, die gerade, untereinander parallel ausgerichtete hin- oder herführende Mäanderabschnitte aufweist, weiterhin mit einer Einrichtung zur Erfassung der Winkelposition des Rotors gegenüber den geraden, hin- oder herführenden Mäanderabschnitten und mit einer Ansteuerelektronik, die anhand der von der Erfassungseinrichtung gebildeten Signale den Stromfluß durch die Leiterbahnanordnung bei motorischer Anwendungso steuert, daß diese ein den Rotor antreibendes Magnetfeld erzeugt.

Ein elektronisch kommutierter Gleichstrommotor dieser Bauart ist aus dem Dokument DE-A-1 613 380 (Ott) bekannt. Die Statorwicklung des bekannten Motors ist in Form einer gedruckten Schaltung auf einem Träger ausgebildet und besteht - bezogen auf eine Hauptfläche des Trägers - ausschließlich aus einer einzigen Windung eines einzigen mäanderförmig geführten Leiters. Obwohl gesagt wird, daß diese Ausbildung der Leiterbahnanordnung "eine denkbar beste Kupferausnutzung gewährleistet", liefert ein solcher Motor mit der bekannten mäanderförmigen Leiterbahnanordnung lediglich ein vergleichsweise geringes Drehmoment, weil der motorisch wirksame, magnetische Luftspalt überwiegend durch magnetisch inerte Materialien, nämlich das Trägermaterial der gedruckten Schaltung und/oder Luft, ausgefüllt ist.

Das Dokument US-A-4 187 453 (Rough) offenbart ein Antriebssystem für Elektromotoren. In erster Linie und hauptsächlich wird ein Schrittmotor beschrieben, bei welchem eine bestimmte mäanderförmige Leiterbahnanordnung Bestandteil eines, eine Linearbewegung oder eine Rotationsbewegung ausführenden Ankers ist. In diesem Falle erfolgt die Stromzuführung über Bürsten oder Schleifringe. Lediglich in zwei Absätzen (Spalte 8, Zeilen 12-30) wird summarisch darauf hingewiesen, daß auch die umgekehrte Anordnung vorgesehen werden kann, bei welcher die mäanderförmige Leiterbahnanordnung stationär angeordnet ist, benachbart zu einem Permanentmagnet-Rotor. Als Erfassungseinrichtung können beispielsweise aufgedruckte Markierungen auf einem transparenten Rotorträger dienen, die mit Hilfe eines Lichtstrahles und eines lichtempfindlichen Empfängers abgetastet werden. Eine solche Anordnung erzeugt nicht notwendigerweise Digitalsignale in Form von Rechteckimpulsen. Auch handelt es sich bei dort beschriebenen "duty cycle modulation in a sine-like funktion" (Spalte 6, Absatz 2) nicht unbedingt um eine Pulsbreitenregelung.

Das Dokument DE-A-1 538 913 (Grebe) bezieht sich auf die Wicklungsbildung von Elektromotoren. Bei dem zugrunde liegenden Motor handelt es sich insbesondere um einen Wechselstrom-Außenläufermotor, der als Kurzschlußläufer ausgebildet ist. Am Innenständer ist eine Statorwicklung angeordnet, die als gedruckte Schaltung auf ein flaches, faltbares Kunststoffband aufgetragen ist, das am ringförmigen Blechpaket des Ständers angeordnet ist. Die einzelnen Windungen der Statorwicklung können durch Lötverbindungen im Sinne einer Reihenschaltung verbunden sein. Alternativ kann die einfachere Parallelschaltung vorgenommen werden. Bei einem Motor mit 220 V Phasenspannung kommt nur eine Reihenschaltung in Frage.

Demgegenüber besteht die Aufgabe der vorliegenden Erfindung darin, eine elektronisch kommutierte Gleichstrommaschine dieser Art bereitzustellen, die im Luftspalt einen hohen Füllfaktor und damit eine hohe Felddichte und Leistungsdichte gewährleistet und die in einem weiten Drehzahl- und Drehmomentbereich eine optimale Umsetzung zwischen elektrischer Leistung und mechanischer Leistung gestattet und dabei einen besonders hohen Wirkungsgrad besitzt.

Ausgehend von einer elektronisch kommutierten Gleichstrommaschine mit den oben angegebenen Merkmalen ist die erfindungsgemäße Lösung dieser Aufgabe dadurch gekennzeichnet, daß jeder hin- oder herführende Mäanderabschnitt aus einer Anzahl geometrisch paralleler Leiterbahnaschnitte besteht, die eckigen Querschnitt aufweisen und ohne zusätzlichen Träger eine stabile, selbsttragende mäanderförmige Leiterbahnanordnung bilden;
die Anfänge und Enden der diese Leiterabschnitte bildenden Leiter - je nach Anwendungsfall - parallel oder in Reihe geschaltet sind;
die Erfassungseinrichtung Digitalsignale in Form von Rechteckimpulsen liefert; und
die Ansteuerelektronik den Stromfluß durch diese mäanderförmige Leiterbahnanordnung auf der Ba-

sis dieser Digitalsignaleüber eine Pulsbreitenregelung steuert.

Nach einem Gesichtspunkt der Erfindung ist diese mäanderförmige Leiterbahnanordnung, deren gerade, hin- oder herführenden Mäanderabschnitte jeweils aus einer Anzahl geometrisch paralleler Leiterabschnitte bestehen, vorzugsweise durch Formwickeln eines, eckigen Querschnitt aufweisenden Leiters erhalten worden. In diesem Falle besteht die mäanderförmige Leiterbahnanordnung vorzugsweise aus einer mäanderförmigen Drahtspule in Zylinderkonfiguration.

Nach einem weiteren Gesichtspunkt der Erfindung kann die Ansteuerelektronik auf einer Platine um die Rotordrehachse herum innerhalb der näanderförmigen Leiterbahnanordnung untergebracht sein. In einem solchen Fall wird vorzugsweise eine ringförmige Platine vorgesehen.

Nach einem weiteren Gesichtspunkt der Erfindung kann die mäandeförmige Leiterbahnanordnung aus mehreren, elektrisch getrennten, mäanderförmigen Drahtspulen in Zylinderkonfiguration bestehen, wobei sämtliche geraden, hin- oder herführenden Mäanderabschnitte aller Spulen auf einem Zylinderumfang um eine gemeinsame Zylinderachse herum angeordnet sind, und Überlappungen lediglich im Bereich der Wickelköpfe außerhalb des magnetisch wirksamen Ringspaltes auftreten.

Nach einem weiteren Gesichtspunkt der Erfindung kann der Permanentmagnet des Rotors als einstückiger Ring mit U-förmigem Querschnitt ausgebildet sein, und das ringförmige Rückschlußteil ragt in den vom Permanentmagneten umschlossenen Hohlraum hinein, und innerhalb des resultierenden U-förmigen Ringspaltes befindet sich die mäanderförmige Leiterbahnanordnung in zylindrischer U-Konfiguration.

Der hohe Füllfaktor der besonderen mäanderförmigen Statorwicklung und deren geringe Eigeninduktion in Verbindung mit der hohen Homogenität der Feldlinien und der optimalen Anordnung der geraden, aus einer Anzahl paralleler Leiterabschnittebestehenden, hin- oder herführenden Mäanderabschnitte völlig innerhalb eines engen, magnetisch wirksamen Ringspaltes in Verbindung mit einer Steuerung über eine Pulsbreitenregelung sind die wesentlichen Gründe für den höheren Wirkungsgrad der erfindungsgemäßen, elektronisch kommutierten Gleichstrommaschine.

Ein beispielhafter, erfindungsgemäß aufgebauter Gleichstrommotor war mit einem vierzig-poligen Permanentmagnet aus Bariumferrit als Rotor ausgerüstet. Die mäanderförmige Leiterbahnanordnung bestand aus einer mäanderförmigen Drahtspule mit 11 parallelen Leiterabschnitten in einlagiger Anordnung pro hin- oder herführendem Mäanderabschnitt. Die Schaltung war für eine Nenndrehzahl von 3.600 U/min ausgelegt. Die Drehzahlschwankungen über den Umfang sind innerhalb des Regelbereiches Last-unabhängig und betragen auf jeden Fall weniger als 1 Promille der Nenndrehzahl. Bei einer Leistungsaufnahme von etwa 4 Watt beträgt der Wirkungsgrad dieses Motors etwa 72 %. Noch höhere Wirkungsgrade erscheinen möglich.

Ferner liefert ein erfindungsgemäß aufgebauter Gleichstrommotor ein hohes, gleichförmiges Anlaufmoment aus jeder Stellung des Rotors heraus. Dank des hohen Füllfaktors der erfindungsgemäß vorgesehenen Statorwicklung wird eine kleinere Spaltbreite als bei herkömmlichen Gleichstrommotoren mit permanentmagnetischer Erregung ermöglicht, die praktisch nur von den Fertigungstoleranzen abhängig ist, ohne daß magnetische Fesselung in Rotationsrichtung auftritt.

Die über die Wickelköpfe miteinander verbundenen, geraden, hin- oder herführenden Mäanderabschnitte sind vorzugsweise parallel zur Rotordrehachse ausgerichtet. Der Abstand zwischen einem geraden hinführenden Mäanderabschnitt und dem benachbarten geraden herführenden Mäanderabschnitt korrespondiert mit dem Abstand zwischen den neutralen Zonen benachbarter Pole des Permanentmagneten. Vorzugsweise kann jeder hin- oder herführende Mäanderabschnitt pro Drahtlage eine solche - von den Leiterquerschnittsabmessungen abhängige - Anzahl Leiterabschnitte aufweisen, daß die Breite eines geraden hin- oder herführenden Mäanderabschnittes kleiner als die Polbreite der Permanentmagnete ist. Besonders bevorzugt übersteigt die Mäanderabschnittsbreite die halbe Polbreite nicht. Wird in die Lücke zwischen zwei benachbarten hin- und herführenden Mäanderabschnitten einer Mäanderspule ein gerader hin- oder herführender Mäanderabschnitt einer anderen, elektrisch getrennten Mäanderspule eingefügt, so kann der Füllfaktor noch weiter gesteigert werden. Auf diese Weise kann der magnetisch wirksame Ringspalt nahezu völlig mit gegenseitig isolierten, optimal angeordneten Leiterabschnitten ausgefüllt werden, soweit die berührungsfreie Rotation der Permanentmagnet-Stirnflächen des Rotors gewährleistet bleibt.

Vorzugsweise übersteigt die Länge der Permanentmagnetpole die Länge der geraden hin- oder herführenden Mäanderabschnitte nur geringfügig. Die vollständig im vielpoligen homogenen Magnetfeld befindlichen, miteinander verbundenen, hin- oder herführenden Mäanderabschnitte sind längs des Umfanges eines Zylinders oder Kegelstumpfabschnittes eng benachbart im Abstand zur Umlaufbahn der Permanentmagnetpol-Stirnflächen angeordnet.

Die erfindungsgemäße Bauweise ermöglicht auch bei vergleichsweise geringem Rotordurchmesser und Verwendung üblicher Magnetmaterialien wie etwa Ferrite für den Permanentmagnetrotor eine ganz wesentliche Erhöhung des Drehmoments im Vergleich zu herkömmlichen elektronisch kommutierten Gleichstrommotoren bei außerordentlich hoher Gleichförmigkeit der Drehmomentverteilung über den Umfang in Abhängigkeit vom Drehwinkel. Weiterhin können auf einem Rotor durch mehrfache Anwendung dieses Bauprinzips mehrere Antriebsebenen innerhalb einer einzigen Rotationsebene um eine gemeinsame Drehachse herum realisiert werden. Derartige Antriebsebenen können mechanisch-geometrisch phasenverschoben zueinander angeordnet sein, so daß eine weitere Steigerung der Gleichförmigkeit des Drehmoments resultiert. Schließlich kann das vom Motor abgegebene Drehmoment zusätzlich über die Länge der Permanentmagnetpole beeinflußt werden.

Der hohe Füllfaktor, die optimale Feldverteilung und die Vermeidung jeglicher magnetischen Fesselung zwischen Rotor und Statoranordnung bewirken ein überraschend hohes Drehmoment, eine hohe Gleichförmigkeit der Drehmomentverteilung und ermöglichen eine ausgezeichnete Konstanz der Nenndrehzahl bei motorischer Anwendung. Aufgrund dieser Eigenschaften ist die erfindungsgemäße Gleichstrommaschine bei der Anwendung als Gleichstrommotor insbesondere zum Antrieb von rotierenden Speichermedien in der Datenverarbeitungstechnik geeignet, weil eine höhere Datendichte auf den Speichermedien ermöglicht wird.

Ein weiterer Gesichtspunkt der Erfindung betrifft die Anwendung einer Gleichstrommaschine in Form eine elektronisch kommutierten Gleichstrommotors mit den oben angegebenen Merkmalen zum Antrieb der Spindel für solche rotierenden Speichermedien. Insbesondere ist der erfindungsgemäße Motor zum Antrieb solcher rotierender Speichermedien geeignet, die höchste Anforderungen an die Konstanz der Umdrehungsgeschwindigkeit und die präzise Anordnung des Plattenauflagetellers stellen, um einen exakten und schnellen Zugriff des Schreib/Lese-Kopfes der Speichereinrichtung zu schaffen. Derartige Anforderungen treten insbesondere bei Hartplattenspeichern auf. Die erfindungsgemäße elektrische Gleichstrommaschine ist bei motorischer Anwendung hervorragend als Antriebsaggregat für derartige Hartplattenspeicher geeignet. Ein mit einem erfindungsgemäßen Gleichstrommotor angetriebener Plattenspeicher, insbesondere Winchester-Plattenspeicher, erlaubt eine wesentlich höhere Datendichte, etwa bis zum 10-fachen der derzeit möglichen Datendichte.

Weitere vorteilhafte Ausgestaltungen und Weiterbildungen der Erfindung ergeben sich aus den Unteransprüchen.

Wie bereits gesagt, weist die mäanderförmige Leiterbahnanordnung als wirksame Abschnitte miteinander verbundene, hin- oder herführende Mäanderabschnitte aus einer Anzahl geometrisch paralleler Leiterabschnitte auf. Die Anordnung dieser hin- oder herführenden Mäanderabschnitte längs des Umfanges eines Zylinders oder Kegelstumpfabschnittes erlaubt eine parallele Ausrichtung zur Drehachse des Rotors. Vorzugsweise sind auch die neutralen Zonen zwischen benachbarten Polen des Permanentmagneten parallel zu dieser Rotordrehachse ausgerichtet, so daß eine Anzahl gerader Leiterabschnitte resultiert, die sich in optimaler Anordnung zur Erzeugung eines den Rotor antreibenden Magnetfeldes befinden. Dadurch wird ein hohes Anlaufmoment und ein hoher Wirkungsgrad erhalten.

Nach einer alternativen Ausgestaltung können die hin- und herführenden Mäanderabschnitte der Leiterbahnanordnung unter einem Winkel zu den neutralen Zonen zwischen benachbarten Polen des Permanentmagneten verlaufen. Dadurch kann das Anlaufverhalten des Motors beeinflußt und dessen Drehmomentverteilung über dem Umfang noch weiter geglättet werden.

Benachbarte hin- und herführende Mäanderabschnitte der Leiterbahnanordnung sind über einen weiteren Leiterbahnabschnitt miteinander verbunden. Die resultierenden Wickelköpfe können vollständig innerhalb des magnetischen Luftspaltes angeordnet sein. Vorzugsweise verlaufen die Wickelköpfe außerhalb des magnetisch wirksamen Luftspaltes in der Verlängerung des Ringspaltes. Es resultieren wenige Bahnen mit kurzen Wegen über den Kopf der Statoranordnung, so daß geringe Ohm'sche Verluste auftreten. Der gesamte, magnetisch wirksame Ringraum steht für die Aufnahme der Statorwicklung zur Verfügung, und die Motorlager belastende Axialkräfte werden vermieden.

Bei einer alternativen Ausgestaltung können die Wickelköpfe aus der geometrischen Verlängerung des Ringspaltes herausgeführt sein. Eine solche Bauweise ist für Motoren mit geringerBauhöhe zweckmäßig, die bei begrenzter Bauhöhe dennoch ein hohes Drehmoment liefern sollen. In einem solchen Falle können beispielsweise die aus dem Ringspalt herausgeführten Wickelköpfe unter einem Winkel, insbesondere senkrecht zur geometrischen Verlängerung des Ringspaltes verlaufen.

Die Anordnung der geraden, hin- oder herführenden Mäanderabschnitte längs des Umfanges eines Kegelstumpfabschnittes wird dann vorgesehen, wenn die Pole des Permanentmagneten mit ihrer Längsachse geneigt zur Motordrehachse ausgerichtet sind, so daß die Polflächen in einer kegelstumpfförmigen Umlaufbahn rotieren. In einem solchen Falle soll der Winkel zwischen Umfangsfläche und Längsmittellinie des Kegelstumpfabschnittes vorzugsweise weniger als $20°$ und besonders bevorzugt weniger als $15°$ betragen, um eine ausreichende Homogenität der Feldlinienverteilung des Permanentmagenten zu gewährleisten.

Zwischen den parallelen, hin- oder herführenden Mäanderabschnitten werden vorzugsweise gleiche Abstände vorgesehen, die eine über den Umfang der zylindrischen oder Kegelstumpfabschnitt-förmigen Anordnung verteilte, gleichmäßige Polteilung ergeben, welche mit der Polteilung des Permanentmagneten korrespondiert, d.h. übereinstimmt oder in einem ganzzahligen Verhältnis dazu steht. Besonders bevorzugt stimmt der Abstand zwischen einem geraden hinführenden Mäanderabschnitt und dem benachbarten geraden herführenden Mäanderabschnitt mit der Polbreite des Permanentmagneten überein. Auf diese Weise entspricht die Teilung der Polzahl über den Ringumfang des Permanentmagneten der Teilung der hin- oder herführenden Mäanderabschnitte über den Umfang des Zylinders oder Kegelstumpfabschnittes Allerdings ist eine übereinstimmende Anzahl der Pole und der hin- oder herführenden Mäanderabschnitte nicht erforderlich. Beispielsweise können gegenüber 36 Polen von insgesamt 40 Permanentmagnetpolen 36 hin- oder herführende Mäanderabschnitte vorgesehen werden, und gegenüber den restlichen 4 Permanentmagnetpolen befinden sich keine hin- und herführenden Mäanderabschnitte, weil der entsprechende Platz für Magnetfeldsensoren und/oder Kontaktierungen der Leiteranschlüsse ausgenutzt wird.

Die Länge der hin- oder herführenden Mäanderabschnitte soll an die Länge der Permanentmagnetpole angepaßt sein, um ein optimales Antriebsmoment zu gewährleisten. Die Länge der Permanentmagnetpole ist nicht besonders beschränkt und kann im Extremfall von einigen Millimetern bis zu einigen Metern reichen. Beispielsweise ist zum Antrieb einer Fensterjalousie ein Jalousiemotor nach dem erfindungsgemäßen Bauprinzip realisiert worden, der bei einem Durchmesser von lediglich ca. 6 cm eine Pollänge von 150 cm und mehr aufweist, um das zum Antrieb der Jalousie erforderliche, hohe Drehmoment zu liefern. Alternativ kann zum Antrieb einer Uhr oder dergleichen ein erfindungsgemäßer Gleichstrommotor mit einer Pollänge von lediglich ca. 2 mm ausreichend sein. Zur Anwendung als Antriebsaggregat für einen Winchester-Plattenspeicher weist der erfindungsgemäße Gleichstrommotor vorzugsweise eine Pollänge zwischen 4 und 24 mm, beispielsweise eine Pollänge von etwa 9 mm auf.

Die Anzahl der geraden, parallelen, gegenseitig isolierten Leiterabschnitte pro hin- oder herführenden Mäanderabschnitt ist nicht besonders beschränkt und hängt von verschiedenen Faktoren ab. Pro Mäanderabschnitt sollen wenigstens zwei Leiterabschnitte vorhanden sein. Eine größere Anzahl Leiterabschnitte wird bevorzugt, um einen höheren Füllfaktor zu erreichen. Andererseits soll die Breite eines geraden, hin- oder herführenden Mäanderabschnittes die Polbreite der Permanentmagnetpole nicht übersteigen. Besonders bevorzugt wird die maximale Anzahl gerader, paralleler, gegenseitig isolierter Leiterabschnitte pro Ebene/Lage dahingehend gewählt, daß - abhängig von den Leiterquerschnittsabmessungen - die Breite eines geraden hin- oder herführenden Mäanderabschnitts die halbe Polbreite der Permanentmagnetpole nicht übersteigt. Bei Polbreiten von 4 bis 6 mm hat sich beispielsweise eine mäanderförmige Leiterbahnanordnung, deren gerade hin- oder herführende Mäanderabschnitte eine Breite von 2 bis 3 mm aufweisen und aus 10 bis 30 parallel geführten Leiterabschnitten bestehen, gut bewährt.

Die mäanderförmige Leiterbahnanordnung besteht aus herkömmlichen, elektrisch leitenden Materialien mit vorzugsweise niedrigem spezifischem Ohm'schen Widerstand. Gut geeignet sind beispielsweise Leitermaterialien aus Cu, Al, Ag, Au, Pt und deren Legierungen. Der einzelne Leiter weist eckigen, insbesondere rechteckigen Querschnitt auf, um einen besonders hohen Füllfaktor zu erzielen. Für den/die Leiter sind solche Querschnittsabmessungen vorgesehen, daß auch ohne zusätzlichen Träger eine stabile, selbsttragende mäanderförmige Leiterbahnanordnung eng benachbart zur Umlaufbahn der Polflächen erhalten wird. Eine solche mäanderförmige Leiterbahnanordnung kann beispielsweise durch Formwickeln erzeugt werden. Die Stabilität einer durch Formwickeln erzeugten Leiterbahn kann durch nachträgliche Imprägnierung mit flüssigem, aushärtendem Kunstharz oder durch Verwendung von sog. Back-Lack-Draht erhöht werden. Weiterhin kann die durch Formwickeln erzeugte mäanderförmige Drahtspule am Umfang des Rückschlußteils befestigt werden, beispielsweise mittels eines isolierenden Klebemittels.

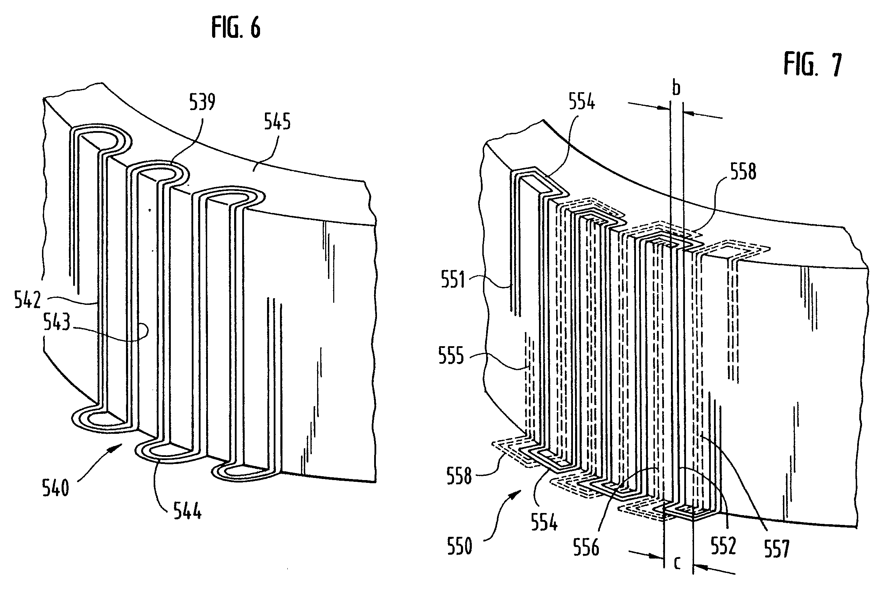

Weiterhin kann eine geeignete mäanderförmige Drahtspule in Zylinderkonfiguration dadurch erhalten werden, daß zuerst ein endloser Leiter zu einer ein- oder mehrlagigen Zylinder- oder Flachspule gewickelt wird, und diese daraufhin zu einer Mäanderspule in Zylinderkonfiguration verformt wird. Beispielsweise kann zuerst eine ein- oder mehrlagige Zylinderspule gewickelt werden und diese dann zu einer Mäanderspule in Zylinderkonfiguration verformt werden. Die Verformung der Zylinderspule kann mittels einer Anzahl erster und zweiter Greifelemente erfolgen, welche die Zylinderspule längs eines virtuellen, sich verjüngenden Kegelstumpfabschnittes so verschieben, daß simultan der Spulendurchmesser verringert und die geraden, hin- und herführenden Mäanderabschnitte erzeugt werden. Alternativ kann eine ringförmige Flachspule gewikkeltwerden, diese ringförmige Flachspule zu einer mäanderförmigen Flachspule verformt werden, und wenigstens die geraden, hin- oder herführenden Mäanderabschnitte in die Zylinderkonfiguration gebracht werden. Zum Abwinkeln der hin- und herführenden Mäanderabschnitte kann ein rohrförmiges Werkzeug dienen, das diese Abschnitte unmittelbar am Umfang eines ringförmigen Rückschlußteils anlegt. Danach kann eine Anordnung erhalten werden, wie sie ausschnittsweise in Fig. 6 dargestellt ist.

In die Lücken zwischen benachbarte Mäanderabschnitte einer solchen Drahtspule können die Mäanderabschnitte einer oder mehrerer, weiterer, mäanderförmigen Drahtspule(n) eingefügt sein. Hierdurch kann der Füllfaktor im magnetischen Luftspalt, und damit die EMK, noch weiter gesteigert werden. Es wird eine mäanderförmige Leiterbahnanordnung aus mehreren, elektrisch getrennten, mäanderförmigen Drahtspulen in Zylinderkonfiguration erhalten, deren mäanderförmige Drahtspulen aus mehreren parallelen Windungen in ein- oder mehrlagiger Anordnung aufgebaut und so ineinander angeordnet sind, daß sämtliche geraden, hin- oder herführenden Mäanderabschnitte auf einem Zylinderumfang um eine gemeinsame Zylinderachse herum angeordnet sind, und Überlappungen lediglich im Bereich der Wickelköpfe außerhalb des magnetisch wirksamen Ringspaltes auftreten. Eine solche, aus wenigstens zwei, elektrisch getrennten, ineinander angeordneten Drahtspulen aufgebaute, mäanderförmige Leiterbahnanordnung wird bevorzugt, weil praktisch der gesamte Raum innerhalb des magnetisch wirksamen Ringspaltes mit optimal angeordneten Leiterabschnitten zur Erzeugung eines magnetischen Moments ausgefüllt werden kann.

In einem solchen Falle kann die Breite "b" eines hin- oder herführenden Mäanderabschnittes eine Drahtspule gleich der Lückenbreite "c" zwischen zwei benachbarten Mäanderabschnitten einer anderen Drahtspule gewählt werden. Diese Lückenbreite "c" kann mit dieser anderen im wesentlichen analog ausgebildeten, elektrisch getrennten mäanderförmigen Drahtspule ausgefüllt werden, so daß Überlappungen lediglich im Bereich der Wickelköpfe außerhalb des magnetisch wirksamen Ringspaltes auftreten. Eine solche mäanderförmige Drahtspulenanordnung mit zwei ineinander angeordneten Drahtspulen ist ausschnittsweise mit Fig. 7 dargestellt.

Jede mäanderförmige Drahtspule kann mehrlagig aufgebaut sein, beispielsweise bis zu 5 oder 6 Drahtlagen aufweisen, ohne daß die magnetischen Eigenschaften geändert werden. Vorzugsweise wird jedoch eine einlagige Drahtanordnung vorgesehen, weil eine hohe EMK in einem engen Luftspalt erzielbar ist.

Nach einem wesentlichen Gesichtspunkt der vorliegenden Erfindung bestehen die geraden hin- oder herführenden Mäanderabschnitte der mäanderförmigen Leiterbahnanordnung aus einer Anzahl geometrisch paralleler Leiterabschnitte, wobei die Anfänge und Enden der diese Leiterabschnitte bildenden Leiter je nach Anwendungsfall parallel oder in Reihe geschaltet sind. Eine Serien-Schaltung ermöglicht eine Anpassung an Nennspannungen. Durch Parallel-Schaltung bei gleicher Nennspannung kann das Anlaufmoment beeinflußt und bei höheren Drehzahlen die Gegen-EMK verringert werden.

Der Durchmesser einer erfindungsgemäß vorgesehenen mäanderförmigen Leiterbahnanordnung ist nicht besonders beschränkt. Für die Anwendung als Antriebsaggregat beim Winchester-Speicher kommen beispielsweise Durchmesser zwischen 40 und 120 mm in Betracht; vorzugsweise sind hierfür Durchmesser zwischen etwa 60 und 90 mm vorgesehen. Andererseits kann ein erfindungsgemäßer Gleichstrommotor für die Anwendung bei Kraftfahrzeugen zum Direktantrieb der Räder für den Durchmesser der mäanderförmigen Leiterbahnanordnung in Zylinderkonfiguration auch Werte von 40 cm und mehr aufweisen.

Die Erfassungseinrichtung zur Erfassung der Winkelposition des Rotors ist mit Sensoren ausgerüstet; hierfür kommen Einrichtungen in Betracht, die auf Halleffekten, Wiegand-Effekten oder optoelektronischen Effekten beruhen. Ferner kommen als Sensoren Näherungsschalter in Betracht. Derartige Sensoren sind bezüglich der magnetischen Polmitten aller stromdurchflossenen, parallelen, hin- und herführenden Mäanderabschnitte elektrisch winkelpräzise angeordnet, so daß die Kommutierung in den Nulldurchgängen des Magnetflusses erfolgt. Diese winkelpräzise Anordnung kann neutral, voreilend oder nacheilend zur Kommutierung vorgesehen werden.

Die Sensoren liefern Signale an die Ansteuerelektronik zur Steuerung des Stromdurchgangs durch den/die Leiter der mäanderförmigen Leiterbahnanordnung. Es werden solche Sensoren vorgesehen, welche Digitalsignale in Form von Rechteckimpulsen für die Ansteuerelektronik liefern. Neben der Kommutierung für den Motor kann aus diesen Rechteckimpulsen ein Regelsignal für die Drehzahlsteuerung in Abhängigkeit von Last und Spannung gewonnen werden. Diese Drehzahlsteuerung wird über eine Pulsbreitenregelung vorgenommen. Die Ansteuerelektronik steuert den Stromfluß durch den oder die Leiter, so daß diese(r) ein den Rotor antreibendes Magnetfeld erzeug(t)en. Beispielsweise kann dieser Stromfluß durch An- und Ausschalten oder durch Umpolung gesteuert werden. Hierzu kann die Ansteuerelektronik beispielsweise eine Schaltung aufweisen, wie sie in dem Dokument US-A-4 309 675 beschrieben ist.

Nach einem weiteren Gesichtspunkt der Erfindung ist diese Ansteuerelektronik vorzugsweise auf einer Platine innerhalb der Gleichstrommaschine untergebracht; besonders bevorzugt kann hierzu eine ringförmige Platine vorgesehen werden, die im Ringraum zwischen Rotordrehachse und Statoranordnung untergebracht ist. Es resultiert eine hervorragende Abschirmung der Ansteuerelektronik. In einem solchen Falle wird vorzugsweise eine solche geometrische Anordnung der Anschlußkontakte des oder der Leiter und/oder der Sensoren der Erfassungseinrichtung vorgesehen, die eine direkte Verbindung dieser Anschlußkontakte mit der Ansteuerelektronik erlaubt.Dadurch entfallen lange Leitungswege zur Ansteuerelektronik.

Auf einer solchen Platine innerhalb der Antriebsebene kann sich ein Steuerquarz befinden, der zusammen mit aktiven Bauelementen eine Frequenz erzeugt, mit welcher - bei motorischer Anwendung - die Drehzahl der Gleichstromaschine stabilisiert werden kann. Damit als Steuerquarz billige Uhrenquarze mit einer Quarzfrequenz von 32.768 Hz als Referenznormale eingesetzt werden können, werden zweckmäßigerweise Permanentmagnetrotoren mit einer $1/2^n$-fachen Polzahl vorgesehen, also Rotoren mit Polzahlen von 56, 128 oder 256 Polen.

Das Rückschlußteil besteht vorzugsweise aus einem Material, das neben hoher Permeabilität nur geringe Ummagnetisierungsverluste aufweist, insbesondere bei den hier auftretenden hohen Frequenzen - bei der erfindungsgemäß angestrebten Vielpolanordnung können Kommutierungsfrequenzen bis zu mehreren 100 kHz auftreten. Für das Material werden beispielsweise Permeabilitäten $\mu$ von über 40 bis zu 10.000 und mehr, vorzugsweise von 150 bis 2.000, angestrebt. Als Material für einen solchen, stationär angeordneten magnetischen Schluß kommen beispielsweise Sinterwerkstoffe und/oder Pulverpreßstoffe mit hoher Permeabiltität und geringer elektrischer Leitfähigkeit wie etwa Weichferrite in Betracht.

Der magnetische Schluß weist eine an die Konfiguration der Leiterbahnanordnung angepaßte ringförmige Gestalt auf. Je nach Bauweise des Motors kann die stromdurchflossene Leiterbahnanordnung nur am Außenumfang des ringförmigen Rückschlußteils oder sowohl an dessen Außenumfang wie an dessen Innenumfang angeordnet sein. Auch eine Zuordnung von mehreren zylinderförmigen oder kegelstumpfförmigen Leiterbahnanordnungen zu mehreren magnetischen, ringförmigen Rückschlußteilen ist möglich, so daß ein Gleichstrommotor mit mehreren aktiven Antriebsebenen innerhalb einer Rotationsebene um eine gemeinsame Achse herum resultiert.

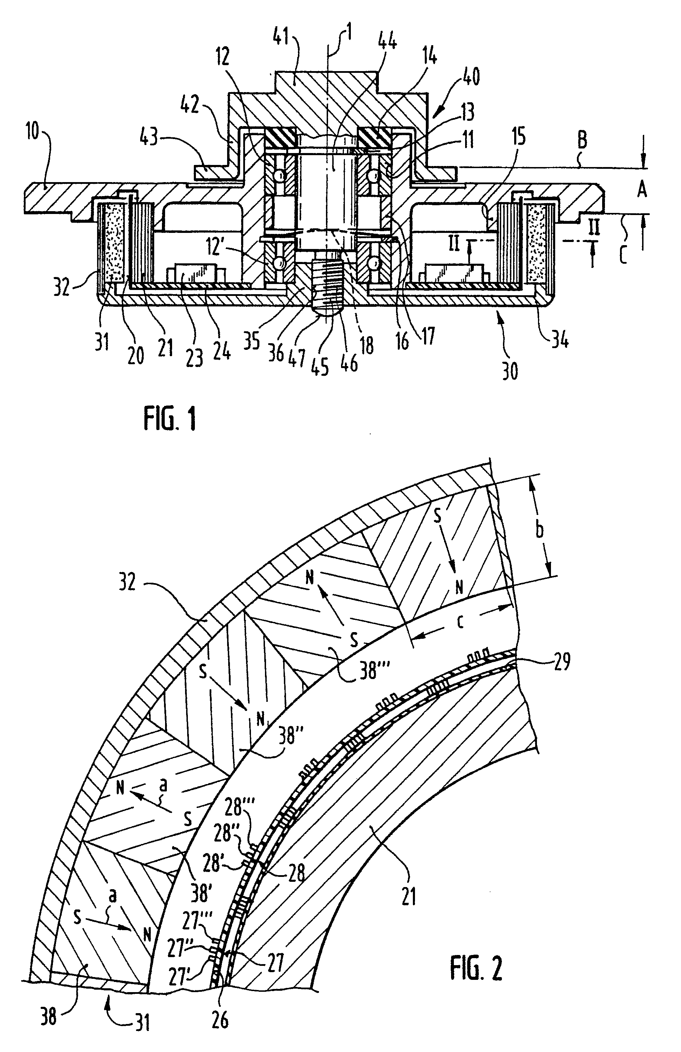

Bei einer beispielhaften Ausführungsform, wie sie nachstehend mehr im einzelnen mit Bezugnahme auf Fig. 1 erläutert ist, weist der dargestellte erfindungsgemäße Gleichstrommotor eine Antriebsebene auf, und die mäanderförmige Leiterbahnanordnung in Zylinderkonfiguration ist unter Zwischenlage einer elektrischen Isolierung am Außenumfang eines ringförmigen Rückschlußteils befestigt, das seinerseits mit seinem Innenumfang an einem ringförmigen Gehäuseabschnitt des Motors abgestützt ist. In diesem Falle rotieren die Polflächen des Permanentmagneten des Rotors außen um die Leiterbahnanordnung herum, so daß ein Außenläufer vorliegt.

Die den rotierenden Polen des Permanentmagneten zugewandte Fläche des Rückschlußteils bildet eine glatte Fläche, ist also nutenlos sowie frei von Einkerbungen, Vertiefungen und dergleichen ausgebildet.

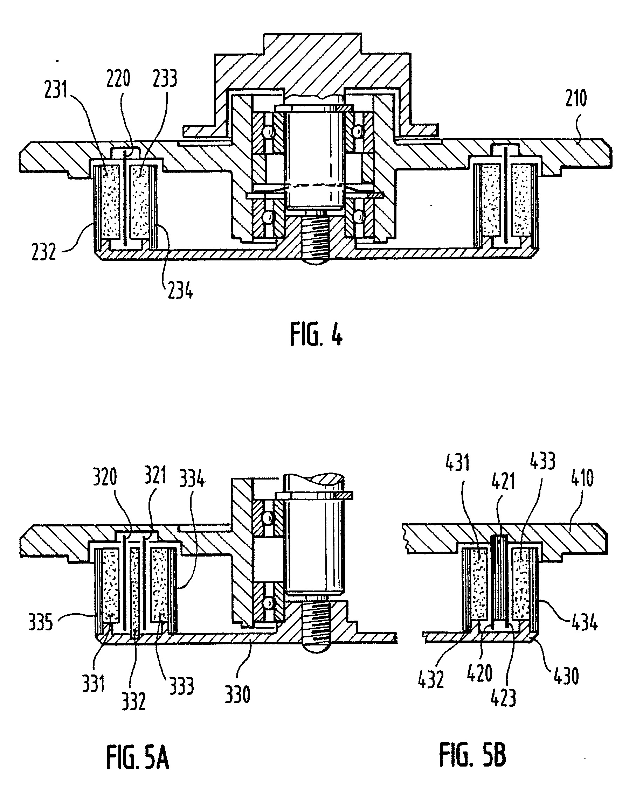

Alternativ zu der vorstehend erläuterten Ausführungsform mit stationär angeordnetem Rückschlußteil kann wenigstens ein magnetischer Schluß um die Drehachse des Rotors drehbar angeordnet sein. Im einfachsten Falle kann ein solcher drehbarer magnetischer Schluß aus einem weiteren Permanentmagneten des Rotors bestehen, der konzentrisch zum anderen Permanentmagneten des Rotors angeordnet ist und synchron mit diesem rotiert. In diesem Falle ist die Leiterbahnanordnung im Ringspalt zwischen zwei synchron rotierenden Permanentmagneten angeordnet, und jeder Permanentmagnet dient wechselseitig als Rückschlußteil für den anderen Permanentmagneten. Eine solche Ausführungsform ist nachstehend mehr im einzelnen mit Bezugnahme auf Fig. 4 erläutert.

Der Rotor des erfindungsgemäßen Gleichstrommotors weist einen oder mehrere Permanentmagnete(n) auf, dessen/deren Pole im wesentlichen senkrecht zur Drehachse polarisiert sind. Der Permanentmagnet eines Rotors kann aus mehreren Segmenten bestehen, die auf einer zur Rotordrehachse konzentrischen Kreisbahn angeordnet sind. Vorzugsweise besteht ein solcher Permanentmagnet aus einem einzigen, geschlossenen Ring.

Nach einem weiteren Gesichtspunkt der Erfindung kann der Permanentmagnet des Rotors als einstückiger Ring mit U-förmigem Querschnitt ausgebildet sein. Das ringförmige Rückschlußteil ragt in den von diesem U-förmigen Permanentmagneten umschlossenen Hohlraum hinein und innerhalb des resultierenden U-förmigen Ringspaltes befindet sich die mäanderförmige Leiterbahnanordnung in angepaßter zylindrischer U-Konfiguration. An der Außenseite des U-förmigen Permanentmagneten kann zusätzlich Rückschlußmaterial anliegen.

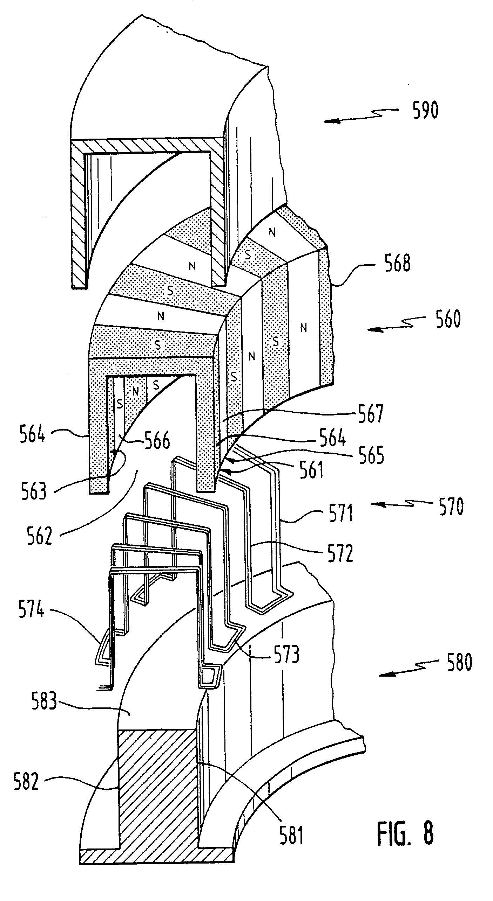

Eine solche Anordnung ist ausschnittsweise - in auseinandergezogener Darstellung - in Fig. 8 dargestellt. Eine erfindungsgemäße Gleichstrommaschine mit U-förmigem Permanentmagnetring als Rotor und angepaßter mäanderförmiger Drahtspule liefert eine besonders hohe EMK, weil in einem kleinen Bauraum eine große gestreckte magnetische Länge realisiert wird.

Zur Erzeugung der Pole in einem geeigneten Permanentmagneten geht man von permanentmagnetisierbarem Material hoher Koerzitivkraft aus. Beispielsweise kann der Permanentmagnet aus pulverförmigem Magnetmaterial bestehen, das homogen in einer Kunststoffmatrix dispergiert ist. Als Magnetmaterialien kommen beispielsweise Ferrite, insbesondere Strontium- oder Bariumferrite sowie SM/Co- oder Nd/Fe-Materialien, ausgewählte seltene Erd-Verbindungen und dergleichen in Betracht.

Ein geeigneter, sektorförmiger oder ringförmiger Permanentmagnet ist vielpolig lateral magnetisiert und wird vorzugsweise an der zur Leiterbahn abgewandten Seite mit Rückschlußmaterial belegt. Hierfür kann beliebiges Weicheisenmaterial vorgesehen werden, weil keine Ummagnetisierung eintritt. Zweckmäßigerweise wird auf eine möglichst innige Verbindung zwischen Magnetmaterial und Rückschlußmaterial geachtet. Hierzu kann das Rückschlußmaterial in die zur Herstellung des Permanentmagneten vorgesehene Spritzgußform eingelegt werden, und das thermoplastische, permanentmagnetisierbare Material wird aufgespritzt bzw. aufgepreßt. Zweckmäßigerweise erfolgt die Stromstoßmagnetisierung an dem mit Rückschlußmaterial versehenen ringförmigen Magnetmaterial, bevor diese Einheit in ein Gehäuse eingebaut wird, um induktive Magnetisierungsverluste in den umgebenden Gehäuseteilen und Feldverzerrungen zu vermeiden. Anstelle der Belegung mit Rückschlußmaterial könnte auch ein ringförmiger Permanentmagnet größerer Poltiefe vorgesehen werden.

Die Anzahl und Größe der Pole des Permanentmagneten werden durch die Magnetisierungsbedingungen festgelegt. Die Polbreite eines einzelnen Poles, das ist dessen Abmessung in Umfangsrichtung des ringförmigen Permanentmagneten kann von ca. 3,0 mm bis 30 mm reichen; die größeren Werte kommen insbesondere bei Motoren mit hohen Leistungen in Betracht, beispielsweise bei einem Linearantrieb für Kraftfahrzeuge.

Für Motoren zum Antrieb von rotierenden Speichermedien in der Datenverarbeitungstechnik werden vorzugsweise Polbreiten von ca. 2 bis 6 mm vorgesehen. Die Poltiefe, das ist die Abmessung in radialer Richtung eines ringförmigen Permanentmagneten, hängt von dem verwendeten Magnetmaterial ab; insbesondere bei Magnetmaterialien mit sehr hoher Koerzitivkraft, wie etwa den Co/Sm-Materialien, kann eine geringere Poltiefe ausreichen. Vorzugsweise wird ein angenähert quadratischer Querschnitt eines einzelnen Poles mit gleichen Werten von Polbreite und Poltiefe vorgesehen. Für einen als Antriebsaggregat für einen Winchester-Speicher vorgesehenen erfindungsgemäßen Gleichstrommotor ist beispielsweise eine Polbreite und eine Poltiefe von jeweils etwa 3,8 mm vorgesehen. Wie bereits oben festgestellt, kann die Länge der Pole des Permanentmagneten in weitem Umfang schwanken und beispielsweise von einigen Millimetern bis zu einigen Metern reichen.

Die Ausrichtung der Polpolarisierung im wesentlichen senkrecht auf die Rotor-Drehachse zu erlaubt die Realisierung und optimale Ausnutzung einer hohen Polzahl bei vergleichsweise geringem Rotorumfang. Wie aus obigen Angaben über die Polbreite hervorgeht, kann ein ringförmiger Permanentmagnet mit einem Durchmesser von ca. 4 cm bereits 40 und mehr Pole aufweisen.

Insbesondere wenn es auf Gleichförmigkeit des Drehmoments und Konstanz der Umlaufgeschwindigkeit eines Motors ankommt, wird im Rahmen der vorliegenden Erfindung eine hohe Polzahl angestrebt. Bei einem Rotor mit 32 und mehr Polen kann die Abweichung der Drehzahlschwankung über den Umfang bei Anwendung einer entsprechenden Ansteuerelektronik vorzugsweise unter 1 Promille gehalten werden. Weil zusätzlich jegliche magnetische Fesselung dank der glatten, nutenfreien Zylinderwand des Rückschlußteils ausgeschaltet ist, erzeugt ein solcher Motor praktisch keinerlei magnetische Laufgeräusche (Magnetostriktion). Andererseits ist die erzielbare Polzahl keineswegs auf die oben angegebenen Werte beschränkt. Nach dem erfindungsgemäßen Bauprinzip sind bereits Gleichstrommotoren realisiert worden, die mehr als 200 Pole, beispielsweise 512 Pole aufweisen.

Wie oben bereits angedeutet, kann ein Rotor mehrere, ringförmige, geschlossene Permanentmagnete aufweisen, die auf zur Drehachse konzentrischen Kreisbahnen mit unterschiedlichem Durchmesser angeordnet sind, um mehrere Antriebsebenen innerhalb einer Rotationsebene um eine gemeinsame Drehachse herum zu realisieren. Hierbei können einzelne Antriebsebenen motorisch betrieben und eine oder mehrere weitere Ebene(n) generatorisch betrieben werden, beispielsweise als Tachogenerator. In dem resultierenden Ringspalt zwischen zwei synchron rotierenden Permanentmagneten kann lediglich eine Leiterbahnanordnung mit einer oder mehreren elektrisch phasenverschobenen Mäanderspulen vorgesehen sein. In einem solchen Falle dient jeder Permanentmagnet wechselseitig als magnetischer Schluß für den anderen Permanentmagneten. Alternativ kann in einem Ringspalt mit angepaßter Breite jedem Permanentmagnet eine Leiterbahnanordnung mit einer oder mehreren Mäanderspulen zugeordnet sein, wobei der Raum zwischen den Leiterbahnanordnungen mit einem magnetischen Schluß ausgefüllt ist, der als Bestandteil der Statoranordnung stationär angebracht ist. Nach einer weiteren Abwandlung könnte im Raum zwischen den beiden Leiterbahnanordnungen auch ein rotierender magnetischer Rückschluß für die Permanentmagneten untergebracht sein.

Bezogen auf eine Raumeinheit vermag ein erfindungsgemäß aufgebauter Gleichstrommotor ein besonders großes Drehmoment zu erzeugen. Gegenüber herkömmlichen Gleichstrommotoren kann in der gleichen Raumeinheit ein mehrfaches Drehmoment, beispielsweise das dreifache Drehmoment erzeugt werden. Bei Anwendung einer passenden Erfassungseinrichtung, verbunden mit einer entsprechenden Ansteuerelektronik kann eine außerordentlich hohe Konstanz der Nenndrehzahl des Motors erzielt werden; beispielsweise können die Abweichungen von der Nenndrehzahl ohne weiteres unter 1 Promille gehalten werden. Für Gleichstrommotoren mit diesen Eigenschaften bestehen zahlreiche Anwendungsmöglichkeiten. Beispielsweise kann der erfindungsgemäße Gleichstrommotor für den Antrieb des rotierenden Kopfes und/oder des Bandes von Videorecordern verwendet werden. Weiterhin können Servormotoren für Lage- und Positionsänderung nach dem erfindungsgemäßen Bauprinzip aufgebaut sein. In Kombination mit Regelschaltungen kann die erfindungsgemäß aufgebaute Maschine als Tachogenerator Verwendung finden. Für derartige Tachogeneratoren können Permanentmagnete mit sehr geringer Poltiefe und geringem Polabstand vorgesehen werden, um Tachofrequenzen über 300 Hz bis zu 100 kHz und mehr zu realisieren. Weiterhin kann ein erfindungsgemäß aufgebauter Gleichstrommotor als Motor für Plattenspieler eingesetzt werden. Ferner kommen erfindungsgemäß aufgebaute Gleichstrommotoren als Kapstan-Antrieb bei Tonbandgeräten in Betracht.

Eine besonders bevorzugte Anwendung betrifft die Verwendung eines erfindunggemäßen Gleichstrommotors als Antriebsaggregat zum Antrieb von rotierenden Speichermedien in allen Feldern der elektronischen Signalverarbeitung, z.B. in der Datenverarbeitung, der Unterhaltungselektronik und dergleichen. Beispielsweise kann der erfindungsgemäße Gleichstrommotor als Antriebsaggregat in Floppy-Disk-Speichern vorgesehen werden. Ganz besonders bevorzugt wird der erfindungsgemäße Gleichstrommotor als Antriebsaggregat beim sog. Winchester-Plattenspeicher verwendet, weil eine mehrfache Datendichte realisiert werden kann. Neben hoher Konstanz der Drehzahl und des Drehmoments erfordert dieser Winchester-Plattenspeicher auch eine besonders genaue Einstellung der Plattenauflageebene in Referenz zu den Schreib/Lese-Köpfen.

Zu diesem Zweck kann der Rotor des erfindungsgemäßen Gleichstrommotors fest mit einem Auflageflansch verbunden sein, dessen Flanschebene auf einige Mikrometer genau gegenüber einer Bezugsebene einstellbar ist.

Häufig werden die Speichermedien derartiger Speichereinrichtungen in einem Überdruckraum betrieben, um das Eindringen von gegebenenfalls verschmutztem Fremdgas sicher auszuschließen, um dadurch einer Verschmutzung der Speichermedien vorzubeugen. Bei bekannten Antriebsaggregaten kann das zur Aufrechterhaltung des Überdruckes erforderliche Gas über die Rotorlagerung entweichen.

Demgegenüber kann ein erfindungsgemäß aufgebauter Gleichstrommotor als Innenläufer ausgebildet sein und ein geschlossenes, topfförmiges Gehäuse aufweisen, das druckdicht in einen Überdruckraum eines Plattenspeichers einsetzbar ist. In einem solchen Falle befindet sich auch das Rotorlager im Überdruckraum, so daß keine zusätzlichen Lagerabdichtungen erforderlich sind. Zweckmäßigerweise sind in einem solchen Falle auch die Komponenten des Motors mit einem das Austreten von Staubpartikeln verhindernden Schutzüberzug überzogen, so daß der in das Motorgehäuse eintretende Gasstrom keinerlei Staubpartikel ablösen und mitführen kann.

Nachstehend wird die Erfindung mehr im einzelnen anhand bevorzugter Ausführungsformen mit Bezugnahme auf die Zeichnungen erläutert; die letzteren zeigen:

Fig. 1

in schematischer Darstellung einen Schnitt in axialer Richtung durch einen erfindungsgemäßen, als Außenläufer ausgebildeten Gleichstrommotor;

Fig. 2

anhand einer schematischen Querschnittsdarstellung die Zuordnung von Magneten und Leiterbahnabschnitten im Luftspalt bei einer nicht unter den Anspruch 1 fallenden Ausführungsform der Gleichstrommaschine;

Fig. 3

in schematischer Darstellung einen Schnitt in axialer Richtung durch eine weitere Ausführungsform eines erfindungsgemäßen, als Innenläufer ausgebildeten Motors, der druckdicht in den Überdruckraum einer Speichereinrichtung eingesetzt ist;

Fig. 4

in schematischer Darstellung einen Schnitt in axialer Richtung durch eine weitere Ausführungsform eines erfindungsgemäßen Motors, dessen Rotor zwei benachbarte ringförmige Permanentmagnete aufweist;

Fig. 5a und 5b
in ausschnittsweiser Darstellung weitere Ausführungsformen erfindungsgemäßer Motoren, bei denen mehrere Antriebsebenen innerhalb einer Rotationsebene um eine gemeinsame Achse realisiert sind;

Fig. 6
einen Ausschnitt einer mäanderförmigen Drahtspule in Zylinderkonfiguration für die Anwendung in einer erfindungsgemäßen Gleichstrommaschine;

Fig. 7
einen Ausschnitt einer Drahtspulenanordnung aus zwei ineinander angeordneten, mäanderförmigen Drahtspulen in Zylinderkonfiguration für die Anwendung in einer erfindungsgemäßen Gleichstrommaschine;

Fig. 8
in auseinandergezogener Darstellung - ausschnittsweise - einen U-förmigen, ringförmigen, vielpoligen Permanentmagneten mit angepaßter mäanderförmiger Drahtspule und angepaßten inneren und äußeren Rückschlußteilen; und

Fig. 9
anhand graphischer Darstellungen einen Vergleich der Gleichförmigkeit der Drehmomentsverteilung zwischen einem erfindungsgemäßen Motor und einem herkömmlichen Gleichstrommotor.

Die Fig. 1 zeigt einen erfindungsgemäßen Gleichstrommotor, dessen Rotor 30 um eine Drehachse 1 drehbar gelagert ist. Dieser Motor weist eine Grundplatte 10 auf, an welcher die wesentlichen Motorkomponenten befestigt sind. Diese Grundplatte 10 kann aus verstärktem Kunststoffmaterial oder aus nicht-magnetischem, metallischem Material wie etwa Aluminium bestehen. Am Innenumfang der im wesentlichen ringförmigen Grundplatte 10 ist einstückig eine Hülse 11 angeformt, in deren Bohrung die Lager für die Welle des Rotors 30 eingesetzt sind. Bei diesen Lagern kann es sich beispielsweise um Kugellager oder Gleitlager handeln. In der dargestellten Ausführungsform sind zwei, in axialer Richtung im Abstand zueinander angeordnete, Kugellager 12 und 12' vorgesehen. Das obere Kugellager 12 liegt an einem Spannring 13 an, der in eine am Außenumfang der Rotorwelle ausgesparte Ringnut eingesetzt ist. Hierdurch ist das obere Kugellager 12 gegenüber einer axialen Verschiebung begrenzt. Oberhalb dieses Spannringes 13 befindet sich eine Dichtung 14, die selbst den Austritt feinster Staubpartikel verhindert.

Am Außenumfang eines ringförmigen, von der Grundplatte 10 in axialer Richtung nach unten abstehenden Flansches 15 liegt der magnetische Schluß der Statoranordnung an. Bei der dargestellten Ausführungsform besteht dieser magnetische Schluß aus einem Ring 21 aus Weichferrit. Am glatten Außenumfang des Ringes liegt - unter Zwischenschaltung einer elektrischen Isolierung - die mäanderförmige Leiterbahnanordnung 20 an. Eine Ansteuerelektronik 23 ist auf einer ringförmigen Platine 24 im Ringraum innerhalb der Leiterbahnanordnung 20 und mit dieser direkt verbunden, angeordnet. Über eine - nicht dargestellte - Zuführungsleitung kann die Ansteuerelektronik 23 mit Strom und Spannung zum Betrieb des Motors versorgt werden. Weiterhin sind - nicht dargestellte - Sensoren vorhanden, welche die Stellung des Magnetfeldes des Rotors gegenüber der Statoranordnung erfassen und die Ansteuerelektronik 23 mit den entsprechenden Signalen versorgen.

Eng benachbart im Abstand zu den hin- und herführenden Mäanderabschnitten der mäanderförmigen Leiterbahnanordnung in Zylinderkonfiguration rotieren die Polflächen des Permanentmagneten 31 des Rotors 30. In der dargestellten Ausführungsform ist dieser Permanentmagnet 31 ringförmig ausgebildet und besteht aus pulverförmigem Magnetmaterial, das in einer ausgehärteten Kunststoffmatrix dispergiert ist. Der Innenumfang des Permanentmagnetringes 31 weist eine glatte Oberfläche auf. Am Außenumfang des Permanentmagnetringes 31 ist magnetisches Rückschlußmaterial in Form eines Weicheisenringes 32 angebracht. Von der Innenseite des Rotorgehäuses 34 steht ein, konzentrisch zur Drehachse 1 angeordneter zylindrischer Ansatz nach innen vor und bildet den Wellenabschnitt 35 des Rotors. Am Außenumfang dieses Rotor-Wellenabschnittes 35 ist eine Stufe ausgespart, mit welcher der Rotor-Wellenabschnitt 35 fest am drehbar gehaltenen Innenring des unteren Kugellagers 12' anliegt. Mit seinem ortsfest gehaltenen Außenumfang liegt dieses untere Kugellager 12' an der Bohrung der Hülse 11 der Grundplatte 10 an und ist gegen axiale Verschiebung gegenüber der Hülse 11 durch einen Spannring 16 gesichert, der in eine am Innenumfang der Hülse 11 ausgesparte Ringnut eingesetzt ist. Aus dem Vollmaterial des Rotor-Wellenabschnittes 35 ist ein konzentrisch angeordnetes - in der dargestellten Ausführungsform durchgehendes - Innengewinde 36 herausgeschnitten. Bei einer alternativen Ausführungsform könnte das von der Innenseite ausgehende Innengewinde 36 nicht durchgängig sein, sondern vor dem Rotorgehäuse enden.

Eine im wesentlichen hutförmige Plattenauflage 40 weist eine Abdeckplatte 41 auf, von der ein zylindrischer, konzentrisch zur Drehachse angeordneter Wandabschnitt 42 absteht, der in einem sich in radialer Richtung erstreckendem Flanschabschnitt 43 endet. Die Oberseite des Flanschabschnittes 43 definiert die Plattenauflage-Ebene "B". Der Innenumfang des zylindrischen Wandabschnittes 42 ist in engem Abstand drehbar zum Außenumfang der Hülse 11 gehalten. Von der Abdeckplatte 41 steht ein mittig angeordneter Wellenabschnitt 44 der Plattenauflage 40 nach innen vor. Mit seinem Außenumfang liegt dieser Plattenauflage-Wellenabschnitt 44 sowohl am drehbar gehaltenen Innenring des oberen Kugellagers 12 wie am drehbar gehaltenen Innenring des unteren Kugellagers 12' an. Der ortsfest gehaltene Außenring des oberen Kugellagers 12 liegt an der Innenwand der Hülse 11 an. zwischen dem oberen Kugellager 12 und dem unteren Kugellager 12' ist ein ringförmiger Abstandshalter 17 eingesetzt, der an der Oberseite einer Wellfeder 18 anliegt, die sich mit ihrer Unterseite am Spannring 16 abstützt. Von der Stirnfläche des Plattenauflage-Wellenabschnittes 44 steht ein mittig angeordneter, mit Außengewinde 46 versehener Schraubbolzen 45 ab. Dieser Schraubbolzen ist in das Innengewinde 36 am Rotor-Wellenabschnitt 35 einschraubbar und weist einen ballig abgerundeten Endabschnitt 47 auf. Zur Erdung des Rotors kann dieser ballige Endabschnitt 47 an einer - nicht dargestellten - geerdeten Kontaktfeder anliegen.

Der Schraubbolzen 45 wird in das Innengewinde 36 am Rotor-Wellenabschnitt 35 eingeschraubt, bis die Wellfeder 18 mechanischgespannt wird. Durch das Anstellen der Drehkraft gegenüber der Wellfeder 18 kann der Abstand "A" zwischen der Plattenauflage-Ebene "B" und einer, durch die Grundplatte 10 definierten Bezugsebene "C" sehr genau eingestellt werden. Bei der hier beschriebenen Ausführungsform ließ sich der Abstand "A" auf wenige Mikrometer genau einstellen. Nach Vornahme der gewünschten Einstellung wird der Schraubbolzen 45 gegen eine Verstellung gegenüber dem Innengewinde 36 gesichert, beispielsweise durch ein Klebemittel. Sofern das Rotorgehäuse 34 und die Plattenauflage 40 aus Aluminium oder einem anderen metallischen Material wie etwa "Zamak" bestehen, kann als Klebemittel beispielsweise "Locktite" dienen.

Für eine Gleichstrommaschine, deren mäanderförmige Leiterbahnanordnung an einem zusätzlichen Träger einer gedruckten Schaltung abgestützt ist (und die deshalb nicht unter den Wortlaut des Anspruches fällt), wird nachstehend mit Bezugnahme auf Fig. 2 die gegenseitige Zuordnung von Permanentmagnet des Rotors und Leiterbahnanordnung des Stators erläutert. Aus Gründen der größeren Übersicht ist lediglich ein ca. 90° umfassendes Segment der vollständigen Ringanordnung dargestellt.

Von außen nach innen gesehen, schließt sich unmittelbar an die Innenwand des Weicheisenringes 32 die Außenwand des ringförmigen Permanentmagneten 31 an. Die Einzelpole 38, 38', 38", 38"' usw. des ringförmigen Permanentmagneten 31 sind alternierend in radialer Richtung, d.h. senkrecht auf die Drehachse zu aufmagnetisiert, was schematisch anhand der Orientierung der Pfeile "a" angedeutet ist. In der dargestellten Ausführungsform entspricht die Poltiefe "b" - das ist die Polabmessung in radialer Richtung - im wesentlichen der Polbreite "c", nämlich der Polabmessung in axialer Richtung.

In engem Abstand (der in Fig. 2 aus Gründen der Übersichtlichkeit größer dargestellt ist) zum Innenumfang des ringförmigenPermanentmagneten 31 ist stationär ein Träger 26 einer gedruckten Schaltung angebracht. An der Außenseite des Trägers sind je drei parallele Leiter 27', 27", 27"' eines hinführenden Mäanderabschnittes 27 der mäanderförmigen Leiterbahnanordnung angebracht. Im Abstand dazu verlaufen an der Außenseite des Trägers 26 je drei parallele Leiter 28', 28" und 28"' eines herführenden Mäanderabschnittes 28 der Leiterbahnanordnung.

Entsprechende hin- und herführende Mäanderabschnitte aus einer Anzahl paralleler Leiter befinden sich - elektromagnetisch versetzt angeordnet - auf der Innenseite des Trägers und liegen - durch eine elektrische Isolierung 29 getrennt - unmittelbar am Außenumfang eines Ringes 21 aus Weichferrit an, welcher den magnetischen Schluß für das die Leiterbahnanordnung durchsetzende Permanentmagnetfeld bildet.

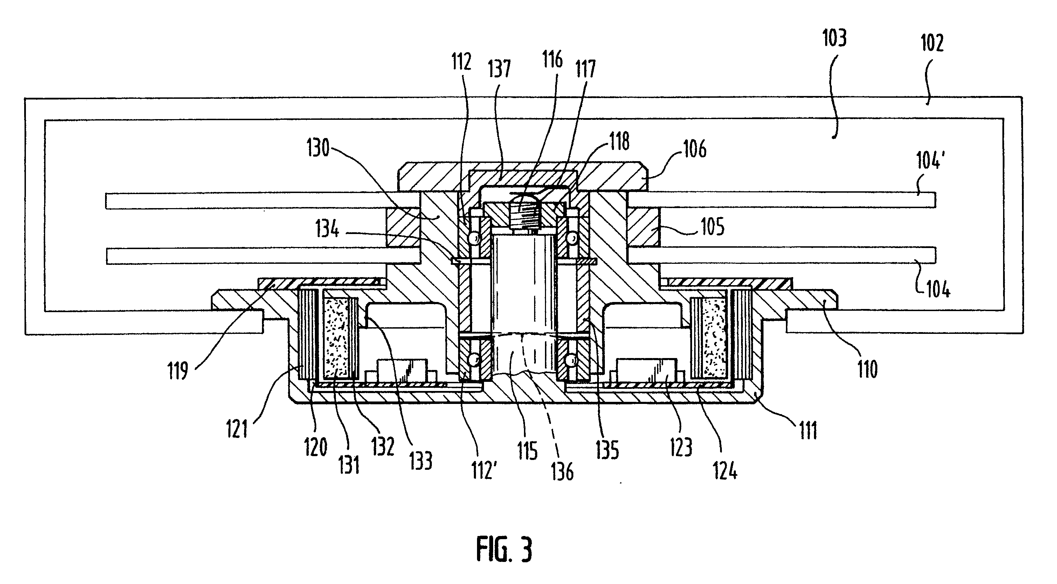

Die Fig. 3 zeigt eine weitere Ausführungsform eines erfindungsgemäßen Gleichstrommotors. Im wesentlichen enthält dieser Motor die gleichen Komponenten wie der Motor nach Fig. 1; jedoch ist gegenüber jenem die Anordnung von Rotor und Stator vertauscht. beim Motor nach Fig. 3 rotiert der ringförmige Permanentmagnet des Rotors innerhalb einer konzentrischen zylindrischen Leiterbahnanordnung, die ihrerseits am Motorgehäuse abgestützt ist (Innenläufer).

Im einzelnen weist der Motor nach Fig. 3 ein topfförmiges Motorgehäuse 111 auf, von dessen Rand ein Ringflansch 110 radial absteht. Mit diesem Ringflansch 110 ist der Motor druckdicht in eine kreisförmige Aussparung eines Gehäuses 102 einsetzbar, das einen Überdruckraum 103 umschließt. Bei Bedarf kann im Abdichtungsbereich eine - nicht dargestellte-Dichtvorrichtung vorgesehen werden. Innerhalb dieses Überdruckraumes befinden sich die vom Motor angetriebenen, rotierenden Speichermedien 104 und 104', die über einen ringförmigen Abstandshalter 105 voneinander getrennt sind. Eine Deckplatte 106 drückt diese Speichermedien 104 und 104' in eine stufenförmige Aussparung am Außenumfang eines Rotorkörpers 130.

Im Innenumfang des zylindrischen Abschnittes des Motorgehäuses 111 liegt der magnetische Schluß für das die mäanderförmige Leiterbahnanordnung 120 durchsetzende Magnetfeld des rotierenden Permanentmagneten an. In der dargestellten Ausführungsform besteht dieser magnetische Schluß aus einem magnetischen Ring 121 aus Weichferrit. Ein enger Spalt trennt die Leiterbahnanordnung 120 von den Polflächen des rotierenden, ringförmigen Permanentmagneten 131. Der ringförmige Permanentmagnet 131 ist längs seines Innenumfangs an einem Weicheisenring 132 abgestützt, der seinerseits fest an einem axial abstehenden Ringflansch 133 des Rotorkörpers 130 angebracht ist. Innerhalb des von der Leiterbahnanordnung 120 umschlossenen Ringraumes befindet sich die Ansteuerelektronik 123, die auf einer ringförmigen Platine 124 angebracht ist, die ihrerseits an der Innenseite des Bodens des Motorgehäuses 111 abgestützt ist. Über - nicht dargestellte - Zuführungsleitungen wird die Ansteuerelektronik 123 mit Strom und Spannung zum Antrieb des Motors versorgt. Im freien Raum unterhalb des Permanentmagneten 131 erstreckt sich die Platine 124 bis zur zylindrischen Leiterbahnanordnung 120, so daß eine direkte Verbindung mit den zur Ansteuerelektronik 123 führenden Anschlüssen möglich ist.

Vom Boden des Motorgehäuses 111 erstreckt sich mittig in axialer Richtung ein mit dem Motorgehäuse 111 einstückig ausgebildeter Zapfen 115 nach innen, an dessen Außenumfang die festgehaltenen Innenringe der Lager 112 und 112' anliegen. Der Endabschnitt des Zapfens 115 ist abgestuft, so daß eine mittige Verlängerung 116 resultiert, an deren Umfang ein Außengewinde 117 eingeschnitten ist. Am balligen Ende der Verlängerung 116 liegt eine Kontaktfeder zur Erdung des Rotors an.

Am Innenumfang des im wesentlichen hülsenförmigen Rotorkörpers 130 liegen die drehbar gehaltenen Außenringe der Lager 112 und 112' an. Am Innenumfang des Rotorkörpers 130 ist eine Ringnut ausgespart, in welche ein Spannring 134 eingesetzt ist, der das obere Lager 112 gegen eine axiale Verschiebung gegenüber dem Rotorkörper 130 abstützt. Am Innenumfang des Rotorkörpers 130 liegt ein ringförmiger Abstandshalter 135 an, der sich mit seiner Oberseite an der Unterseite des Spannringes 134 und mit seiner Unterseite an der Oberseite einer ringförmigen Wellfeder 136 abstützt. Diese Wellfeder 136 liegt mit ihrer Unterseite an der Oberseite des drehbar gehaltenen Außenringes des unteren Lagers 112' an. Der festgehaltene Innenring dieses unteren Lagers 112' ist in eine Stufe am Zapfen 115 des Motorgehäuses 111 eingesetzt.

Ein mit Innengewinde versehenes Gewindestück 118 kann auf das Außengewinde 117 der Zapfenverlängerung 116 aufgeschraubt werden. Mit einer Aussparung an seinem Außenumfang liegt dieses Gewindestück 118 am festgehaltenen Innenring des oberen Lagers 112 an. Über das Anziehen des Gewindestückes 118 kann wiederum die axiale Anordnung des Rotorstückes 130 gegenüber dem Motorgehäuse 111 sehr genau festgestellt werden.

Nach Sicherung der Schraubverbindung zwischen Gewindstück 118 und Zapfenverlängerung 116 wird die mittige Öffnung des Rotorstückes 130 mittels einer Abdeckkappe 137 verschlossen.

Bei dieser Ausführungsform eines erfindungsgemäßen Gleichstrommotors befinden sich die den Rotor 130 und damit auch die Plattenauflage drehbar haltenden Lager 112 und 112' innerhalb des Überdruckraumes 103, so daß eine Lagerdichtung nicht erforderlich ist. Der Arbeitsspalt zwischen dem Permanentmagneten 131 am Rotor 130 und der fest am Motorgehäuse 111 angebrachten Leiterbahnanordnung 120 ist mit einer Sperre 119 überdeckt, die an der Oberseite des Ringflansches 110 angebracht ist. Diese Sperre 119 unterbindet das Austreten von Staubpartikeln aus dem Motor in den Überdruckraum 103. Zusätzlich kann es für diese Ausführungsform zweckmäßig sein, sämtliche Komponenten des Motors mit einem das Ablösen und Austreten von Staubpartikeln verhindernden Schutzüberzug zu bedecken.

Die mit Fig. 4 dargestellte Ausführungsform eines erfindungsgemäßen Gleichstrommotors ist im wesentlichen analog zum Motor nach Fig. 1 aufgebaut. Abweichend ist der beim Motor nach Fig. 1 vorgesehene stationäre magnetische Schluß hier durch einen weiteren ringförmigen Permanentmagneten ersetzt, der am Rotor angebracht ist.

Im einzelnen befindet sich hier die stationär angebrachte zylindrische Leiterbahnanordnung 220 im Arbeitsspalt zwischen zwei ringförmigen Permanentmagneten 231 und 233. Am Umfang des äußeren Permanentmagneten 231 liegt der Weicheisenring 232 an. Der konzentrisch zum äußeren Permanentmagneten 231 angeordnete innere Permanentmagnet 233 liegt mit seinem Innenumfang an einem Weicheisenring 234 an. In diesem Falle wirkt jeder Permanentmagnet 231 und 233 wechselseitig als magnetischer Schluß für das die Leiterbahnanordnung 220 durchsetzende Permanentmagnetfeld des anderen Permanentmagneten.

Anhand der Fig. 5a und 5b sind schematisch verschiedene Alternativen zur Realisierung eines erfindungsgemäßen Motors mit mehreren Antriebsebenen innerhalb einer Rotationsebene um eine gemeinsame Drehachse herum angedeutet. Der Motor nach Fig. 5a weist drei ringförmige, innerhalb einer gemeinsamen Ebene konzentrisch zueinander angeordnete Permanentmagnete 331, 332 und 333 auf, die fest an einem Rotor 330 angebracht sind. Im Arbeitsspalt zwischen den Permanentmagneten 331 und 332 befindet sich die erste zylindrische, mäanderförmige Leiterbahnanordnung 320. Im Arbeitsspalt zwischen den Permanentmagneten 332 und 333 befindet sich die zweite zylindrische, mäanderförmige Leiterbahnanordnung 321. Der Permanentmagnet 331 dient als magnetischer Schluß für das vom Permanentmagneten 332 ausgehende und die Leiterbahnanordnung320 durchsetzende Magnetfeld. An der zur Leiterbahnanordnung 320 abgewandten Seite ist der Permanentmagnet 331 mit einem Weicheisenring 335 belegt. In gleicher Weise dient der Permanentmagnet 333 als magnetischer Schluß für das vom Permanentmagnet 332 ausgehende und die Leiterbahnanordnung 321 durchsetzende Magnetfeld. An der zur Leiterbahnanordnung 321 entfernten Seite ist der Permanentmagnet 333 mit einem Weicheisenring 334 belegt. Durch entsprechende Ansteuerung der Leiterbahnanordnungen 320 und 321 werden mit diesem Motor zwei Antriebsebenen erhalten.

Auch die Ausführungsform nach Fig. 5b liefert zwei Antriebsebenen. Fig. 5b zeigt einen Ausschnitt aus einer Ausführungsform eines erfindungsgemäßen Motors, der im wesentlichen entsprechend dem Motor nach Fig. 1 aufgebaut ist. Ergänzend und abweichend zum Motor nach Fig. 1 ist ein zweiter am Rotor befestigter Permanentmagnet vorgesehen. Innerhalb des Ringspaltes zwischen den beiden Permanentmagneten befindet sich ein stationär angeordneter, magnetischer Schluß.

Im einzelnen sind am Rotor 430 des Motors nach Fig. 5b innerhalb einer Rotationsebene konzentrisch zueinander zwei Permanentmagnete 431 und 433 befestigt. Ein ringförmiger Spalt zwischen diesen beiden Permanentmagneten 431 und 433 ist ausreichend bemessen, um darin einen an der Motorgrundplatte 410 stationär befestigten magnetischen Schluß in Form eines Ringes 421 aus Weichferrit unterzubringen, der an seiner Innenseite und an seiner Außenseite mit je einer zylindrischen, mäanderförmigen Leiterbahnanordnung 420 und 423 versehen ist. Somit befindet sich die erste Leiterbahnanordnung 420 im ersten Arbeitsspalt zwischen Permanentmagnet 431 und stationärem magnetischem Schluß 421. Die zweite Leiterbahnanordnung 423 befindet sich im zweiten Arbeitsspalt zwischen dem anderen Permanentmagneten 433 und dem stationären magnetischen Schluß 421. Der Permanentmagnet 431 ist an der zum Arbeitsspalt abgewandten Seite mit einem Weicheisenring 432 belegt. In gleicher Weise ist der Permanentmagnet 433 an seiner zum zweiten Arbeitsspalt abgewandtenSeite mit einem Weicheisenring 434 belegt.

Die Fig. 6 zeigt einen Ausschnitt einer mäanderförmigen Drahtspule 540 in Zylinderkonfiguration für die Anwendung als Statorwicklung in einer erfindungsgemäßen Gleichstrommaschine. Wie dargestellt befinden sich die geraden, parallelen, hin- und herführenden Mäanderabschnitte 542 und 543 der fertigen Mäanderspulen 540 in Zylinderkonfiguration am Umfang eines ringförmigen Rückschlußteils 545. Die Wickelköpfe 530 und 544 sind abgewinkelt und befinden sich außerhalb der Zylinderkonfiguration. Aus Gründen der klareren Darstellung sind nur wenige, geometrisch parallel geführte Leiter gezeigt. eine für die praktisch Anwendung geeignete, mäanderförmige Drahtspule mit dem Aufbau nach Fig. 6 könnte beispielsweise 10 bis 20 parallel geführte Leiterwindungen in einer Drahtlage aufweisen. Die fertige Mäanderspule kann eine ein- oder mehrlagige Drahtanordnung aufweisen.

Zur Herstellung kann man von einer ringförmigen, ein- oder mehrlagigen Flachspule mit der gewünschten Anzahl paralleler Drahtwindungen ausgehen, und diese ringförmige Flachspule zu einer mäanderförmigen Flachspule verformen. Daraufhin werden die inneren Wickelköpfe 539 auf der Stirnseite des ringförmigen Rückschlußteils 545 benachbart zu dessen Rand befestigt, und die geraden hin- und herführenden Mäanderabschnitte 542 und 543 werden daraufhin mittels eines hohlzylindrischen, als Stempel dienenden Formteils abgewinkelt und in die Zylinderkonfiguration am Umfang des Rückschlußteils 545 gebracht. Die unteren Wickelköpfe 544 können daraufhin nach Bedarf nach innen (auf die Rotordrehachse zu) oder nach außen abgewinkelt werden, um Bauhöhe zu sparen.

Die Fig. 7 zeigt - ausschnittsweise - eine als Statorwicklung für eine erfindungsgemäße Gleichstrommaschine geeignete Drahtspulenanordnung 550, die aus zwei, gegenseitig ineinander angeordneten, jedoch elektrisch getrennten Mäanderspulen 551 und 555 besteht. Je ein Mäanderabschnitt 552 der einen Mäanderspule 551 befindet sich am gleichen Zylinderumfanginnerhalb der Lücke zwischen zwei benachbarten, hin- und herführenden Mäanderabschnitten 556, 557 der anderen Mäanderspule 555. Vorzugsweise entspricht die Breite "b" des Mäanderabschnittes 552 der Lückenbreite "c" zwischen den beiden anderen Mäanderabschnitten 556, 557, so daß praktisch der gesamte Zylinderumfang mit Draht belegt werden kann. Die Wickelköpfe 554, 558 sind aus der Zylinderkonfiguration abgewinkelt, so daß die erforderlichen Überkreuzungen nicht im Bereich des Zylinderumfangs auftreten. Mit einer vergleichsweise einfachen Ansteuerschaltung läßt sich eine exakte Kommutierung der beiden, elektrisch getrennt angesteuerten Drahtspulen 551 und 555 zur Erzeugung eines den Rotor antreibenden Magnetfeldes erzielen. Wiederum sind aus Gründen der klareren Darstellung lediglich einige wenige, parallele Leiterwindungen gezeigt; eine praktische Ausführungsform einer solchen Drahtspulenanordnung kann beispielsweise 10 bis 20 parallele Drahtwindungen in einlagiger Anordnung aufweisen.

Die beiden Drahtspulen 551 und 555 werden unabhängig voneinander hergestellt. Beispielsweise kann man hierzu von einer ein- oder mehrlagigen Zylinderspule mit der gewünschten Anzahl paralleler Windungen ausgehen. Im wesentlichen wird die anfänglich an einem Zylinderumfang erzeugte Zylinderspule von ersten Greifelementen und zweiten Greifelementen gepackt und längs eines virtuellen, sich verjüngenden Kegelstumpfabschnittes so verschoben, daß simultan der Spulendurchmesser verringert, und die geraden, hin- und herführenden Mäanderabschnitte der Mäanderspulen 551 und 555 erzeugt werden. Bei der praktischen Realisierung mit einer geeigneten Wickelmaschine kann diese Verschiebung längs der mittleren Querschnittsebene der Zylinderspule erfolgen.

Die Fig. 8 zeigt - ausschnittsweise - in auseinandergezogener Darstellung einen ringförmigen, vielpoligen Permanentmagneten 560 mit U-förmigem Querschnitt, eine daran angepaßte mäanderförmige Drahtspule 570 und angepaßte, innere und äußere Rückschlußteile 580 und 590.

Der ringförmige Permanentmagnet 560 mit U-förmigem Querschnitt ist vielpolig lateral magnetisiert; d.h., bei einem bestimmten U-förmigen Magnetabschnitt 561 bildet die den U-förmigen Hohlraum 562 einschließende Innenseite 563 den Nordpol, und die gegenüberliegende Außenseite 564 den Südpol. Beim nächstfolgenden Magnetabschnitt 565 bildet die Innenseite 566 den Nordpol und die gegenüberliegende Außenseite 567 den Südpol; usw. An der Außenseite 568 des U-förmigen Permanentmagnetringes 560 kann Rückschlußmaterial in Form eines U-förmigen Ringes 590 passender Abmessung anliegen. Weil dort keine Ummagnetisierung stattfindet, kann dieses Rückschlußteil 590 aus üblichem Weicheisen bestehen. Die mäanderförmige Drahtspule 570 weist angepaßte, zylindrische U-Konfiguration auf, so daß sie in den vom U-förmigen Permanentmagnetring 560 umschlossenen Hohlraum 562 eingeführt und in möglichst engem Abstand zum rotierenden Permanentmagnetring 560 angeordnet werden kann. Vorzugsweise sind die Wickelköpfe 573 und 574 abgewinkelt und parallel im Abstand zu entsprechenden Polflächen angeordnet. Innerhalb der U-förmigen Mäanderspule 570 befindet sich ein Ring 580 aus hochpermeablem Rückschlußmaterial. In der Praxis wird man zuerst die Mäanderspule 570 schwingungsfrei am Innenumfang 581 und am Außenumfang 582 des Rückschlußteils 580 befestigen, und dann diese Anordnung berührungsfrei innerhalb des vom Permanentmagnetring 560 umschlossenen Hohlraum 562 anordnen.

Zur Herstellung der mäanderförmigen Drahtspule 570 in U-förmiger Zylinderkonfiguration kann man beispielsweise von einer mäanderförmigen Flachspule mit ausreichend langen Mäanderabschnitten ausgehen. Die Mäanderabschnitte werden mittig auf der Stirnfläche 583 des inneren Rückschlußteils 580 angeordnet. Die beidseitig über die Wandstärke hinausstehenden Abschnitte der Mäanderabschnitte werden daraufhin mittels eines passenden, ringförmigen Formteils mit U-förmigem Querschnitt abgewinkelt. Es resultiert eine U-förmige Mäanderspule 570 in im wesentlichen Zylinderkonfiguration, deren hin- und herführende Mäanderabschnitte 571 und 572 am Innenumfang 581, an der Stirnfläche 582 und am Außenumfang 582 des Rückschlußteils 580 anliegen. Die Wickelköpfe 572 und 574 können daraufhin aus der Zylinderkonfiguration heraus abgewinkelt werden, um Bauhöhe zu sparen.

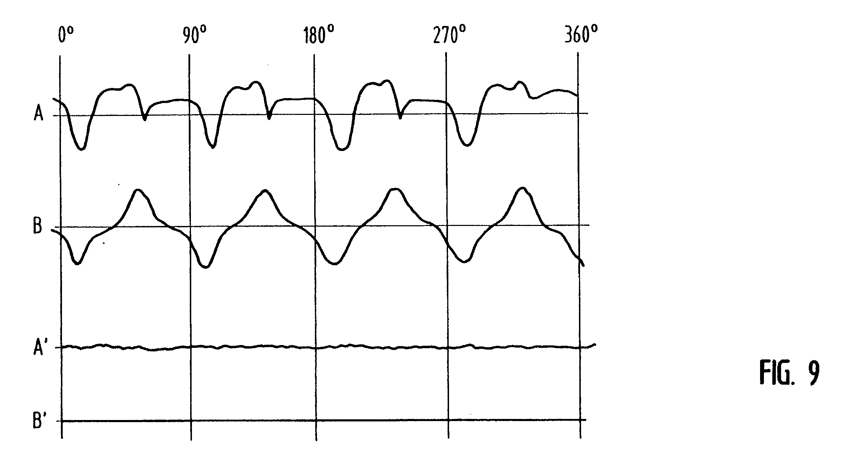

Die Fig. 9 zeigt anhand einer graphischen Darstellung längs der Ordinate den Betrag der winkelabhängigen Drehmomentschwankungen bei einer Motorumdrehung um 360° (längs der Abszisse). Im einzelnen zeigt Kurve A das Stillstandsmoment eines herkömmlichen Motors. Die Kurve B zeigt das Reluktanzmoment des nämlichen herkömmlichen Motors. Die Kurve A' zeigt das Stillstandsmoment und die Kurve B' das Reluktanzmoment eines erfindungsgemäßen Gleichstrommotors mit 40 Polen.

## Ansprüche

1. Elektronisch kommutierte Gleichstrommaschine
   mit einem Rotor (30) mit wenigstens einem Permanentmagneten (31) mit wenigstens vier konzentrisch zur Rotordrehachse (1) angeordneten und im wesentlichen senkrecht zu dieser polarisierten Polen (38, 38', 38", 38'''), benachbart zu einem ringförmigen, nutenfreien Rückschlußteil (21), ferner mit wenigstens einer, im Ringspalt zwischen Rotor (30) und Rückschlußteil (21) angeordneten mäanderförmigen Leiterbahnanordnung (20), die gerade, untereinander parallel ausgerichtete hin- oder herführende Mäanderabschnitte (27, 28) aufweist, weiterhin mit einer Einrichtung zur Erfassung der Winkelposition des Rotors (30) gegenüber den geraden hin- oder herführenden Mäanderabschnitten (27, 28), und mit einer Ansteuerelektronik (23), die anhand der von der Erfassungseinrichtung gebildeten Signale den Stromfluß durch die Leiterbahnanordnung (20) bei motorischer Anwendung so steuert, daß diese ein den Rotor (30) antreibendes Magnetfeld erzeugt,
   dadurch gekennzeichnet, daß
   jeder hin- oder herführende Mäanderabschnitt aus einer Anzahl geometrisch paralleler Leiterbahnabschnitte (27', 27", 27'''; 28', 28", 28''') besteht, die eckigen Querschnitt aufweisen und ohne zusätzlichen Träger eine stabile, selbsttragende mäanderförmige Leiterbahnanordnung(20) bilden;

die Anfänge und Enden der diese Leiterabschnitte (27', 27", 27"'; 28', 28", 28"') bildenden Leiter - je nach Anwendungsfall - parallel oder in Reihe geschaltet sind;

die Erfassungseinrichtung Digitalsignale in Form von Rechteckimpulsen liefert; und

die Ansteuerelektronik (23) den Stromfluß durch diese mäanderförmige Leiterbahnanordnung auf der Basis dieser Digitalsignale über eine Pulsbreitenregelung steuert.

2. Gleichstrommaschine nach Anspruch 1,
   dadurch gekennzeichnet, daß
   jede mäanderförmige Leiterbahnanordnung (20) durch Formwickeln eines, eckigen Querschnitt aufweisenden Leiters erhalten worden ist.

3. Gleichstrommaschine nach Anspruch 1 oder 2,
   dadurch gekennzeichnet, daß
   die mäanderförmige Leiterbahnanordnung (550') aus mehreren, elektrisch getrennten, mäanderförmigen Drahtspulen (551 und 555) in Zylinderkonfiguration besteht, wobei sämtliche geraden, hin- und herführenden Mäanderabschnitte aller Spulen auf einem Zylinderumfang um eine gemeinsame Zylinderachse herum angeordnet sind und Überlappungen lediglich im Bereich der Wickelköpfe (554, 558) außerhalb des magnetisch wirksamen Ringspaltes auftreten.

4. Gleichstrommaschine nach Anspruch 3,
   dadurch gekennzeichnet, daß
   zwei mäanderförmige Drahtspulen (551 und 555) ineinander angeordnet sind, und die Breite ("b") des geraden hin- oder herführenden Mäanderabschnittes (552) der einen Drahtspule (551) im wesentlichen der Lückenbreite ("c") zwischen zwei benachbarten hin- oder herführenden Mäanderabschnitten (556, 557) der anderen Drahtspule (555) entspricht.

5. Gleichstrommaschine nach einem der Ansprüche 1 bis 4,
   dadurch gekennzeichnet, daß
   die Erfassungseinrichtung Sensoren aufweist, die bezüglich der magnetischen Polmitten der stromdurchflossenen, geraden, hin- oder herführenden Mäanderabschnitte elektrisch winkelpräzise angeordnet sind; und
   eine Kommutierung in den Nulldurchgängen des Magnetflusses erfolgt.

6. Gleichstrommaschine nach einem der Ansprüche 1 bis 5,
   dadurch gekennzeichnet, daß

die geraden, hin- oder herführenden Mäanderabschnitte der mäanderförmigen Leiterbahnanordnung unter einem Winkel zu den neutralen Zonen zwischen benachbarten Polen des Permanentmagneten verlaufen.

7. Gleichstrommaschine nach einem der Ansprüche 1 bis 6,
   dadurch gekennzeichnet, daß
   die Breite eines geraden, hin- oder herführenden Mäanderabschnittes kleiner als die Polbreite der Permanentmagnetpole ist, insbesondere deren halbe Polbreite nicht übersteigt.

8. Gleichstrommaschine nach einem der Ansprüche 1 bis 7,
   dadurch gekennzeichnet, daß
   die Ansteuerelektronik (23) auf einer - vorzugsweise ringförmigen - Platine (24) um die Rotor-Drehachse (1) herum innerhalb der mäanderförmigen Leiterbahnanordnung (20) untergebracht ist.

9. Gleichstrommaschine nach Anspruch 8,
   dadurch gekennzeichnet, daß
   auf der Platine (24) ein Steuerquarz vorhanden ist, der zusammen mit aktiven Bauelementen eine Frequenz erzeugt, die - bei motorischer Anwendung - zur Drehzahlstabilisierung der Gleichstrommaschine dient.

10. Gleichstrommaschine nach Anspruch 8,
    dadurch gekennzeichnet, daß
    die geometrische Anordnung der Anschlußkontakte der Leiter und/oder der Sensoren der Erfassungseinrichtung eine direkte Verbindung mit der Ansteuerelektronik (23) erlaubt.

11. Gleichstrommaschine nach einem der Ansprüche 1 bis 10,
    dadurch gekennzeichnet, daß
    das ringförmige Rückschlußteil (21) stationär angeordnet ist, und an seiner dem Rotor (30) zugewandten Fläche - elektrisch isoliert - eine mäanderförmige Leiterbahnanordnung (20) anliegt.

12. Gleichstrommaschine nach einem der Ansprüche 1 bis 11,
    dadurch gekennzeichnet, daß
    der Rotor (330, 430) mehrere Permanentmagneten (331, 333; 431, 433) aufweist, die auf zur Rotordrehachse (1) konzentrischen Kreisbahnen mit unterschiedlichem Durchmesser angeordnet sind, um mehrere Antriebsebenen innerhalb einer Rotationsebene um die gemeinsame Drehachse (1) herum zu realisieren.

**13.** Gleichstrommaschine nach Anspruch 12, dadurch gekennzeichnet, daß im Ringspalt zwischen zwei rotierenden Permanentmagneten (231, 233; 331, 333) wenigstens eine mäanderförmige Leiterbahnanordnung (220; 320, 321) vorhanden ist; und jeder Permanentmagnet wechselseitig als magnetischer Schluß für den anderen Permanentmagneten dient.

**14.** Gleichstrommaschine nach einem der Ansprüche 1 bis 10, dadurch gekennzeichnet, daß der Permanentmagnet (560) des Rotors als einstückiger Ring mit U-förmigem Querschnitt ausgebildet ist; das ringförmige Rückschlußteil (580) in den vom Permanentmagenten (560) umschlossenen Hohlraum (562) hineinragt, und sich innerhalb des resultierenden U-förmigen Ringspaltes eine mäanderförmige Leiterbahnanordnung (570) in zylindrischer U-Konfiguration befindet.

**15.** Gleichstrommaschine nach einem der Ansprüche 1 bis 14, dadurch gekennzeichnet, daß der Rotor (30) fest mit einem Auflageflansch (43) verbunden ist, dessen Flanschebene ("B") auf wenige Mikrometer genau gegenüber einer Bezugsebene ("C") einstellbar ist.

**16.** Gleichstrommaschine nach einem der Ansprüche 1 bis 14, dadurch gekennzeichnet, daß die Maschine als Gleichstrommotor in Form eines Innenläufers ausgebildet ist (vgl. Fig. 3); und ein geschlossenes, topfförmiges Gehäuse (111) aufweist, das druckdicht in einen Überdruckraum (103) eines Gehäuses (102) einsetzbar ist.

**17.** Gleichstrommaschine nach einem der Ansprüche 1 bis 16, dadurch gekennzeichnet, daß die Komponenten der Maschine mit einem das Austreten von Staubpartikeln verhindernden Schutzüberzug bedeckt sind.

**18.** Verwendung einer Gleichstrommaschine nach einem der Ansprüche 1 bis 17 als Antriebsmotor rotierender Speichermedien in der Datenverarbeitungstechnik.

**19.** Verwendung einer Gleichstrommaschine nach einem der Ansprüche 1 bis 17 als Antriebsmotor für einen Winchester-Plattenspeicher.

**20.** Verwendung einer Gleichstrommaschine nach einem der Ansprüche 1 bis 17 als Antriebsmotor in einem Floppy-Disk-Speicher.

**21.** Verwendung einer Gleichstrommaschine nach einem der Ansprüche 1 bis 17 als Antriebsmotor eines Plattenspielers.

**22.** Verwendung einer Gleichstrommaschine nach einem der Ansprüche 1 bis 17 als Antriebsmotor der rotierenden Magnetköpfe und/oder des Bandes von Videorecordern.

**23.** Verwendung einer Gleichstrommaschine nach einem der Ansprüche 1 bis 17 als Kapstan-Antrieb bei Tonbandgeräten.

**24.** Verwendung einer Gleichstrommaschine nach einem der Ansprüche 1 bis 17 als Tachogenerator in Kombination mit entsprechenden Regelschaltungen.

**25.** Verwendung einer Gleichstrommaschine nach einem der Ansprüche 1 bis 17 als Antriebsmotor zum Direktantrieb der Räder eines Kraftfahrzeuges.

**26.** Verwendung einer Gleichstrommaschine nach Anspruch 15, wobei die mäanderförmige Leiterbahnanordnung einen Durchmesser von wenigstens 40 cm aufweist.

**Claims**

**1.** Electronically commutated DC machine comprising a rotor (30) having at least one permanent magnet (31) with at least four poles (38, 38', 38'', 38''') adjacent an annular slot-free return circuit member (21), said poles (38, 38', 38'', 38''') being disposed concentrically to the rotary axis (1) of the rotor (30) and being polarized substantially perpendicularly thereto, further comprising at least one meander-like conductive strip array (20) disposed in an annular gap between the rotor (30) and the return circuit member (21), said strip array (20) including linear, parallel to each other arranged, forward and backward extending meander sections (27, 28), further comprising means for detecting the angular position of the rotor (30) relative to said linear forward and backward extending meander sections (27, 28), and further comprising an electronic control system (23) for controlling on the basis of signals produced by the detecting means the flow of current through the conductive strip array (20) in a motor mode such that said conductive strip array (20) produces a magnetic field to drive the rotor (30),

characterized in that

each of said forward and backward extending meander sections is comprising a number of geometrically parallel conductors sections (27', 27'', 27'''; 28', 28'', 28''') having an angular cross-section and forming without any additional support means a stable self-supporting meander-like conductive strip array (20);

each conductor section (27', 27'', 27'''; 28', 28'', 28''') is formed by a conductor having a starting section and a terminal section, and said conductor starting sections and terminal sections may be connected parallel or in series - due to a specific mode of application;

the detective means provides square wave shaped digital signals; and the electronic control system (23) controls the current flow through the meander-like strip array based on said digital signals using a pulse wide control.

2. DC machine according to claim 1,
characterized in that
each meander-like conductive strip array (20) has been formed by preform winding of a conductor having an angular cross-section.

3. DC machine according to claim 1 or 2,
characterized in that
the meander-like conductive strip array (550') comprises a number of electrically insulated meander-like wire coils (551 and 555) of cylindrical configuration, wherein each of the linear forward and backward extending meander sections of the total number of wire coils being disposed on a cylinder periphery about a common cylinder axis and overlaps merely occur in the region of the winding heads (554, 558) outside of the magnetically active annular gap.

4. DC machine according to claim 3,
characterized in that
two meander-like wire coils (551 and 555) are disposed within one another, and
the width ("b") of one of the linear forward and backward extending meander sections (552) of one wire coil (551) corresponds substantially to the gap width ("c") between two adjacent forward and backward extending meander sections (556, 557) of the other wire coil (555).

5. DC machine according to anyone of claims 1 to 4,
characterized in that

the detecting means comprising sensors being disposed at precise angles relative to the magnetic pole centers of the linear forward and backward extending meander sections through which current flows so that communication is formed when the magnetic flux crosses zero.

6. DC machine according to anyone of claims 1 to 5,
characterized in that
the linear forward and backward extending meander sections of the meander-like conductive strip array extend at an angle to a neutral zone between adjacent poles of the permanent magnet.

7. DC machine according to anyone of claims 1 to 6,
characterized in that
the width of the forward linear and backward extending meander sections is smaller than the pole width of the permanent-magnet poles, especially does not exceed the half pole width thereof.

8. DC machine according to anyone of claims 1 to 7,
characterized in that
the electronic control system (23) being mounted on a - preferably annular - circuit board (24) about the rotary axis (1) of the rotor (30) within the meander-like conductive strip array (20).

9. DC machine according to claim 8,
characterized in that
an oscillator crystal is provided on said circuit board (24), said oscillator crystal together with active components producing a frequency which in the motor mode is used to stabilize the rotary speed of the DC machine.

10. DC machine according to claim 8,
characterized in that
the geometrical arrangement of the terminal contacts of the conductor sections forming the meander-like conductive strip array (20) and/or the terminal contacts of the sensors of the detecting means permit direct connection to the electronic control system (23).

11. DC machine according to anyone of claims 1 to 10,
characterized in that
the annular return circuit member (21) is stationary and wherein on the surface thereof facing the rotor (30) an electrically insulated, meander-like conductive strip array (20) is in engagement therewith.

12. DC machine according to anyone of claims 1 to 11,
characterized in that
the rotor (330, 430) comprises a plurality of permanent magnets (331, 333; 431, 433) disposed on orbits having different diameters and being concentric with the rotary axis (1) of the rotor in order to provide several driving planes within one rotation plane about a common rotary axis (1).

13. DC machine according to claim 12,
characterized in that
in the annular gap between two rotating permanent magnets (231, 233; 331, 333) there is provided at least one meander-like conductive strip array (220; 320, 321) and wherein each permanent magnet alternatively functions as magnetic circuit for the respective other permanent magnet.

14. DC machine according to anyone of claims 1 to 10,
characterized in that
the permanent magnet (560) of the rotor is an integral ring of U-shaped cross-section, wherein the annular return circuit member (580) protrudes into the hollow space (562) enclosed by the permanent magnet (560), and wherein a meander-like conductive strip array (570) of cylindrical U-configuration is provided within the resulting U-shaped annular gap between the rotor and the return circuit member.

15. DC machine according to anyone of claims 1 to 14,
characterized in that
the rotor (30) is fixedly joined to a supporting flange (43) having a flange plane ("B") which is adjustable to an accuracy of a few micrometers relative to a reference plane ("C").

16. DC machine according to anyone of claims 1 to 14,
characterized in that
the machine is an internal rotor-type DC motor (see fig. 3), and further comprising a closed cup-shaped housing (111) adapted to be inserted in a pressure-tight manner into a pressurized chamber (103) of a housing (102).

17. DC machine according to anyone of claims 1 to 16,
characterized in that
the machine comprising components being covered with a protective coating preventing any escape of dust particles.

18. Use of a DC machine according to anyone of claims 1 to 17
as driving motor for rotary disk media in data processing.

19. Use of a DC machine according to anyone of claims 1 to 17
as driving motor for a Winchester disk storage.

20. Use of a DC machine according to anyone of claims 1 to 17
as driving motor in a floppy-disk storage.

21. Use of a DC machine according to anyone of claims 1 to 17
as driving motor of a record player.

22. Use of a DC machine according to anyone of claims 1 to 17
as driving motor for the rotary magnetic heads and/or the tape of video recorders.

23. Use of a DC machine according to anyone of claims 1 to 17
as capstan drive for tape recorders.

24. Use of a DC machine according to anyone of claims 1 to 17
as tacho-generator in combination with corresponding control circuits.

25. Use of a DC machine according to anyone of claims 1 to 17,
as driving motor for direct actuation of the wheels of an automotive vehicle.

26. Use of a DC machine according to claim 25,
wherein the meander-like conductive strip array has a diameter of at least 40 cm.

**Revendications**

1. Machine à courant continu commutée de manière électronique
comprenant un rotor (30) ayant au moins un aimant permanent (31) avec au moins quatre pôles (38, 38', 38", 38''') adjacent à un élément de circuit de retour (21) annulaire exempt de rainure, les pôles (38, 38', 38",38''') étant disposés concentriquement et polarisés essentiellement de manière perpendiculaire par rapport à l'axe de rotation (1) du rotor (30), comprenant en outre au moins un arrangement de piste conductive en forme de méandre (20) agencé dans une fente annulaire entre le rotor (30) et l'élément de circuit de retour (21), la piste conductive (20) comprenant des sections de méandre (27, 28) droites, disposées parallèlement l'une à l'autre et s'étendant en avant et en arrière,

comprenant en outre des moyens de détection de la position angulaire du rotor par rapport aux sections de méandre droites (27, 28) s'étendant en avant et en arrière ainsi qu'un système de commande électronique (23) commandant sur la base des signaux émis par les moyens de détection, le flux de courant passant par l'arrangement de piste conductive (20) en un mode moteur de sorte que cet arrangement de piste conductive (20) produise un champ magnétique entraînant le rotor (30),

caractérisée en ce que

chacune des sections de méandre s'étendant en avant et en arrière consiste en un nombre de sections de piste conductive (27', 27'', 27'''; 28', 28'', 28''') géométriquement parallèles ayant une section transversale angulaire et formant sans moyen de support supplémentaire un arrangement de piste conductive en forme de méandre (20) solide et autoporteur;

chaque section conductive (27', 27'', 27'''; 28', 28'', 28''') est formée par un conducteur ayant une section initiale et une section terminale, et chaque section conductive peut être connectée en parallèle ou en série en fonction du cas spécifique;

les moyens de détection émettent des signaux numériques sous forme d'impulsions rectangulaires; et le système de commande électronique (23) commande le flux de courant par l'arrangement de piste conductive en forme de méandre sur la base des signaux numériques en utilisant un contrôle de largeur d'impulsions.

2. Machine à courant continu selon la revendication 1,

caractérisée en ce que

tout arrangement de piste conductive en forme de méandre (20) a été formé par enroulement préformé d'un conducteur ayant une section transversale rectangulaire.

3. Machine à courant continu selon la revendication 1 ou 2,

caractérisée en ce que

l'arrangement de piste conductive en forme de méandre (550') consiste en plusieurs bobines enroulées isolées en forme de méandre (551 et 555) en configuration cylindrique, toutes les sections de méandre droites s'étendant en avant et en arrière de toutes les bobines enroulées étant disposées sur la périphérie du cylindre autour d'un axe du cylindre commun et des recouvrements n'apparaissant que dans la région des têtes de bobine (554, 558) à l'extérieur de la fente annulaire à activité magnétique.

4. Machine à courant continu selon la revendication 3,

caractérisée en ce que

deux bobines enroulées en forme de méandre (551 et 555) sont disposées l'une dans l'autre et que la largeur ("b") de la section de méandre droite s'étendant en avant et en arrière de l'une des bobines enroulées (551) correspond essentiellement à la largeur de la fente ("c") entre deux sections de méandre adjacentes s'étendant en avant et en arrière (556, 557) adjacentes de l'autre bobine enroulée (555).

5. Machine à courant continu selon l'une des revendications 1 à 4,

caractérisée en ce que

le dispositif de détection présente des capteurs qui sont disposés à des angles précis par rapport aux centres des pôles magnétiques des sections de méandre droites s'étendant en avant et en arrière et parcourues par du courant; et qu'il y a une commutation lorsque le flux magnétique passe par zéro.

6. Machine à courant continu selon l'une des revendications 1 à 5,

caractérisée en ce que

les sections de méandre droites s'étendant en avant et en arrière de l'arrangement de piste conductive en forme de méandre s'étendent à un angle aux zones neutres entre des pôles adjacents de l'aimant permanent.

7. Machine à courant continu selon l'une des revendications 1 à 6,

caractérisée en ce que

la largeur d'une section de méandre droite s'étendant en avant et en arrière, est inférieure à la largeur de pôle des pôles magnétiques permanents, et plus particulièrement ne dépasse pas la moitié de la largeur desdits pôles.

8. Machine à courant continu selon l'une des revendications 1 à 7,

caractérisée en ce que

le système de commande électronique (23) est placé sur une platine (24) de préférence annulaire autour de l'axe de rotation (1) du rotor à l'intérieur de l'arrangement de piste conductive en forme de méandre (20).

9. Machine à courant continu selon la revendication 8,
caractérisée en ce qu'
un cristal oscillateur se trouve sur la platine (24) produisant en liaison avec des composants actifs, une fréquence servant, en mode moteur, à la stabilisation de la vitesse de rotation de la machine à courant continu.

10. Machine à courant continu selon la revendication 8,
caractérisée en ce que
l'arrangement géométrique des bornes des conducteurs et/ou des capteurs du dispositif de détection permet une connexion directe au système de commande électronique (23).

11. Machine à courant continu selon l'une des revendications 1 à 10,
caractérisée en ce que
l'élément de circuit de retour annulaire (21) est stationnaire et qu'un arrangement de piste conductive en forme de méandre (20) est associé - à isolation électrique - à la surface qui se trouve face au rotor (30).

12. Machine à courant continu selon l'une des revendications 1 à 11,
caractérisée en ce que
le rotor (330, 430) présente plusieurs aimants permanents (331, 333; 431, 433) qui sont disposés sur des orbites circulaires à diamètres différents et concentriques par rapport à l'axe de rotation (1) du rotor afin de réaliser plusieurs plans d'entraînement au sein d'un plan de rotation autour de l'axe de rotation (1) commun.

13. Machine à courant continu selon la revendication 12,
caractérisée en ce qu'
il y a dans la fente annulaire entre deux aimants permanents tournants (231, 233; 331, 333) au moins un arrangement de piste conductive en forme de méandre (220; 320, 321); et que chaque amant permanent sert alternativement de circuit magnétique à l'autre aimant permanent.

14. Machine à courant continu selon l'une des revendications 1 à 10,
caractérisée en ce que
l'aimant permanent (560) du rotor est conçu comme anneau intégral avec une section transversale en forme d'U, dans lequel l'élément de circuit de retour annulaire (580) dépasse dans la cavité (562) entourée par l'aimant permanent (560) et dans lequel un arrangement de piste conductive en forme de méandre (570) à configuration cylindrique en forme d'U se trouve à l'intérieur de la fente annulaire résultante en forme d'U.

15. Machine à courant continu selon l'une des revendications 1 à 14,
caractérisée en ce que
le rotor (30) est solidaire d'une bride de support (43), dont le plan de bride ("B") peut être ajusté avec précision à quelques micromètres près par rapport à un plan de référence ("C").

16. Machine à courant continu selon l'une des revendications 1 à 14,
caractérisée en ce que
la machine est un moteur à courant continu à rotor interne (voir la fig. 3); et comprend en outre un bâti fermée en forme de pot (111) agencée de manière à être placée de manière étanche à la pression dans une chambre pressurisée (103) d'un bâti (102).

17. Machine à courant continu selon l'une des revendications 1 à 16,
caractérisée en ce que
les composants de la machine sont couverts d'une couche protectrice empêchant l'échappement de particules de poussière.

18. Emploi d'une machine à courant continu selon l'une des revendications 1 à 17,
en tant que moteur d'entraînement de moyens de mémorisation tournants dans l'informatique.

19. Emploi d'une machine à courant continu selon l'une des revendications 1 à 17,
en tant que moteur d'entraînement d'une mémoire à disque Winchester.

20. Emploi d'une machine à courant continu selon l'une des revendications 1 à 17,
en tant que moteur d'entraînement d'une mémoire à disque souple.

21. Emploi d'une machine à courant continu selon l'une des revendications 1 à 17,
en tant que moteur d'entraînement d'un tourne-disque.

22. Emploi d'une machine à courant continu selon l'une des revendications 1 à 17,
en tant que moteur d'entraînement de têtes L/E tournantes et/ou de la bande de magnétoscopes.

23. Emploi d'une machine à courant continu selon l'une des revendications 1 à 17,
en tant que moteur d'entraînement du moteur de cabestan de magnétophones.

24. Emploi d'une machine à courant continu selon l'une des revendications 1 à 17, en tant que générateur tachymétrique en combinaison avec les circuits de réglage correspondants.

25. Emploi d'une machine à courant continu selon l'une des revendications 1 à 17, en tant que moteur d'entraînement pour la commande directe des roues d'un véhicule automobile.

26. Emploi d'une machine à courant continu selon la revendication 15, l'arrangement de piste conductive en forme de méandre ayant un diamètre d'au moins 40 cm.

FIG. 1

FIG. 2

FIG. 3

EP 0 178 380 B1

FIG. 4

FIG. 5A

FIG. 5B

FIG. 7

FIG. 6

FIG. 8

FIG. 9

EP 0 178 380 B1